# EUROPÄISCHE PATENTANMELDUNG

(11) **EP 4 050 058 A1**
(43) Veröffentlichungstag der Anmeldung: **31.08.2022**
(21) Anmeldenummer: 21159608.5
(22) Anmeldetag: 26.02.2021
(51) Int. Cl.: C08G 77/388, C09D 183/10, D06M 15/643, D06M 15/564, D06M 15/568, C09D 183/08

(54) **EFFEKTPERMANENTES HYDROPHOBIERUNGSMITTEL**

(71) Anmelder: Rudolf GmbH, 82538 Geretsried (DE)
(72) Erfinder: ALBERT, Christine, 83052 Bruckmühl (DE); SCHUBERT, Maximilian, 82515 Wolfratshausen (DE); HORNUNG, Pauline, 81373 München (DE); SIELEMANN, Dirk, 82515 Wolfratshausen (DE)
(74) Vertreter: Weickmann, Hans

(57) **Zusammenfassung**

Die Erfindung betrifft Organopolysiloxane enthaltend mindestens eine Struktureinheit mit mindestens einer C₈₋₂₈-Alkylgruppe und mindestens einer Harnstoffgruppe, ein Verfahren zu deren Herstellung, eine Zubereitung umfassend das Organopolysiloxan, sowie die Verwendung als Hydrophobierungsmittel.

## Beschreibung

Die Erfindung betrifft Organopolysiloxane enthaltend mindestens eine Struktureinheit mit mindestens einer C₈-₂₈-Alkylgruppe und mindestens einer Harnstoffgruppe, ein Verfahren zu deren Herstellung, eine Zubereitung umfassend das Organopolysiloxan, sowie die Verwendung als Hydrophobierungsmittel.

Zur Hydro- bzw. Oleophobierung eines Flächengebildes werden üblicherweise Zubereitungen auf wässriger Basis oder auf Lösungsmittelbasis aus Silikonölen, Paraffin, Fluorcarbonpolymeren und anderen Additiven verwendet, um den Beanspruchungen gegenüber Regen und Spritzwasser während des Gebrauchs des Flächengebildes gerecht zu werden.

Während die Erzeugung von wasserabweisenden Effekten mit Produkten auf Basis von Paraffinen und Silikonen lediglich eine Hydrophobierung bewirkt, führen Fluorcarbonpolymere (FC-Polymere) zusätzlich zu einer Schmutz- und Ölabweisung.

Trotz des insgesamt guten Gesamteffektniveaus der FC-Polymere, ist nach Waschprozessen die Hydrophob- und Oleophobwirkung aufgrund der Desorientierung der aktiven Fluorcarbonreste in den Polymermolekülen stark reduziert, sofern nicht durch thermische Behandlung eine Reorientierung stattfindet. Dies bedeutet, dass solcherart behandelte Flächengebilde und vor allem Textilien nach dem Waschen, einer Hitzebehandlung unterzogen werden müssen, um die gewünschten Effekte zu reaktivieren. Diese Hitzebehandlung wird im Folgenden als "Reaktivierung" bezeichnet.

Ferner sind Zubereitungen auf Fluorcarbonpolymerbasis - unter anderem bedingt durch eine energieaufwendige Herstellung - teuer und stehen außerdem unter Verdacht öko- und humantoxisch zu sein, sodass ihr Einsatz insbesondere im Bekleidungsbereich zunehmend kritisch gesehen wird. Es wird daher nach alternativen fluorfreien Produkten mit vergleichbaren Eigenschaftsprofilen gesucht, wobei nicht nur eine gute Anfangshydrophobie, sondern auch die Beständigkeit der Appretur gegenüber mehrmaligem Waschen ein wichtiges Qualitätsmerkmal ist.

In EP 3 733 809 A1 werden Zubereitungen auf Basis von Amino-modifizierten Silikonen, Organopolysiloxanen mit dreidimensionaler Struktur und Alkylpolysiloxanen zum Erzielen wasserabweisender Effekte auf textilen Materialien verwendet.

WO 2018/110667 beschreibt Zusammensetzungen zur Hydrophobierung von Substraten, umfassend ein Polymer, das aus nicht-fluorierten (Meth-)Acrylatresten und Silikonmakromeren zusammengesetzt ist.

Aus WO 2008/135208 sind fluorcarbonfreie Zubereitungen auf Basis von hydrophoben Umsetzungsprodukten und C₈-C₂₈-Alkylgruppen enthaltenden Organopolysiloxanen bekannt.

In WO 2015/191326 werden zur Hydrophobierung von Substraten Zubereitungen offenbart, die neben einem Wachs eine Urethan-basierte Verbindung umfassen. Das Wachs kann beispielsweise ein natürliches oder synthetisches Wachs oder Mischungen davon sein.

Mit den Zubereitungen lassen sich gute wasserabweisende Effekte erzielen, jedoch sind üblicherweise relativ hohe Einsetzmengen erforderlich, wodurch die Atmungsaktivität des ausgerüsteten Textils verringert wird. Ferner muss nach dem Waschen, ähnlich wie bei den mit fluorcarbonhaltigen Zubereitungen behandelten Textilien, eine thermische Behandlung (Reaktivierung), z.B. im Wäschetrockner oder durch Bügeln, erfolgen, um das ursprüngliche Effektniveau zurückzuerhalten.

Es ist daher Aufgabe der vorliegenden Erfindung, eine Verbindung und Zubereitung bereitzustellen, die bereits bei geringen Einsatzmengen gute und permanente hydrophobe Effekte ermöglichen, ohne dass eine Reaktivierung notwendig ist (LAD-Effekt,"Laundry/Air Dry", M. Rasch et al., Melliand Textilberichte 6/2005, S. 456-459).

Überraschenderweise konnte die Aufgabe durch ein Organopolysiloxan enthaltend mindestens eine Struktureinheit mit mindestens einer langkettigen Alkylgruppe und mindestens einer Harnstoffgruppe gelöst werden. Der Effekt konnte darüber hinaus in den erfindungsgemäßen Zubereitungen, die ein erfindungsgemäßes Organopolysiloxan enthalten, verstärkt werden. Bereits geringe Einsatzmengen des erfindungsgemäßen Organopolysiloxans bewirken auf dem Substrat eine hervorragende Hydrophobierung. Die erfindungsgemäßen Zubereitungen bewirken darüber hinaus eine ausgezeichnete Haftung an dem Substrat, sodass sich das Effektniveau mit der Zeit kaum verändert (Effektpermanenz) und auch in der Anwendung, z.B. durch Abrasion, Waschen, etc. beibehalten werden kann.

Überraschenderweise hat sich darüber hinaus gezeigt, dass das Effektniveau auch ohne Reaktivierungsmaßnahmen konstant gehalten werden kann (LAD-Effekt).

Es hat sich weiterhin gezeigt, dass schwer entflammbare Fasern, wie z. B. Trevira CS und daraus hergestellte Textilien auch nach Auftrag der erfindungsgemäßen Verbindung bzw. Zubereitung, ihre Flammfestigkeit nicht einbüßen, obwohl sich der Flammschutz durch Auflage eines FC-freien Hydrophobierungsmittels in der Regel verschlechtert.

In einem Aspekt, betrifft die Erfindung ein Organopolysiloxan enthaltend mindestens eine Struktureinheit (i) und/oder (vi): 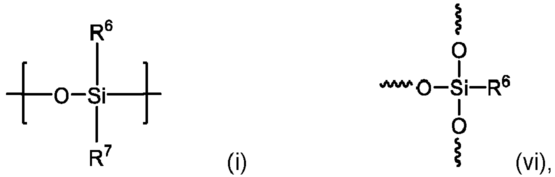 wobei
R⁶ unabhängig voneinander mindestens eine C₈₋₂₈-Alkylgruppe, bevorzugt C₁₄₋₂₀-Alkylgruppe, stärker bevorzugt C₁₆₋₁₈-Alkylgruppe, und mindestens eine Harnstoffgruppe enthält, und
R⁷ unabhängig voneinander ausgewählt ist aus -CH₃, -OH, und einer -C₁₋₅-Alkoxygruppe, bevorzugt -CH₃.

R⁶ enthält bevorzugt mindestens eine C₈₋₂₈-Alkylharnstoffgruppe gemäß der vorliegenden Formel: 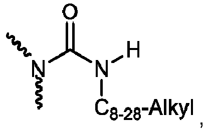 stärker bevorzugt enthält R⁶ mindestens eine C₁₄₋₂₀-Alkylharnstoffgruppe, noch stärker bevorzugt eine C₁₆₋₁₈-Alkylharnstoffgruppe.

In einer bevorzugten Ausführungsform ist R⁶ eine Formel ausgewählt aus 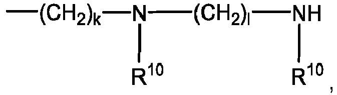 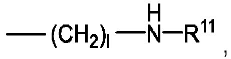 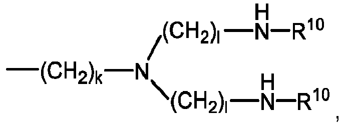 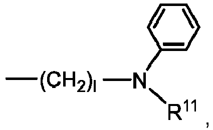 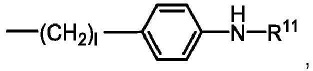 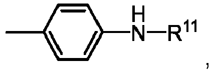 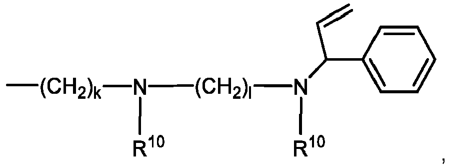 und 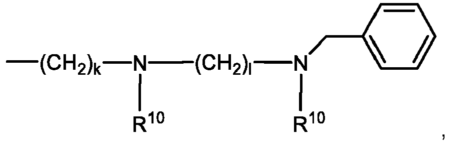 wobei
R¹⁰ unabhängig voneinander H oder R¹¹ ist,
R¹¹ unabhängig voneinander -C(O)-NH-C₈₋₂₈-Alkyl, stärker bevorzugt -C(O)-NH-C₁₄₋₂₀-Alkyl, noch stärker bevorzugt -C(O)-NH-C₁₆₋₁₈-Alkyl ist,
mit der Maßgabe, dass R⁶ mindestens ein R¹¹ enthält,
k 2-4, bevorzugt 2-3 ist und
I 2-4, bevorzugt 2-3 ist.

Ferner kann das erfindungsgemäße Organopolysiloxan mindestens eine Struktureinheit ausgewählt aus 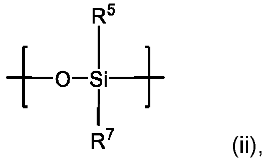 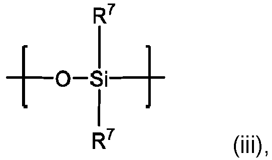 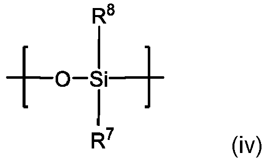 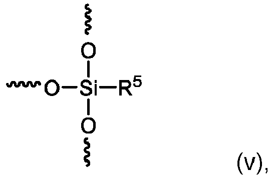 und 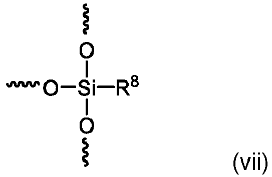 enthalten, wobei
R⁵ unabhängig voneinander eine C₈₋₂₈-Alkylgruppe, bevorzugt C₁₄₋₂₀-Alkylgruppe, stärker bevorzugt C₁₆₋₁₈-Alkylgruppe ist,
R⁸ unabhängig voneinander ausgewählt ist aus

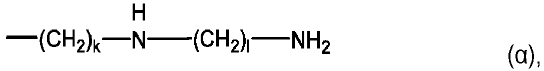

   -(CH₂)ₗ-NH₂ (β),

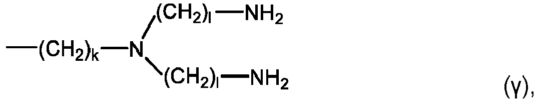

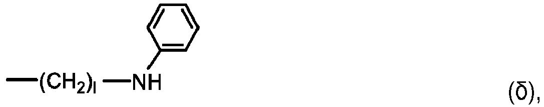

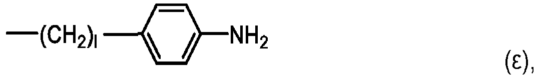

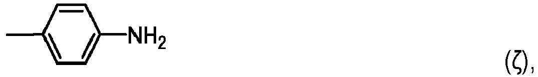

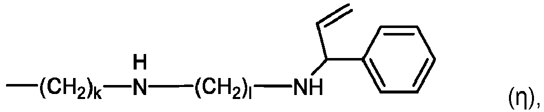

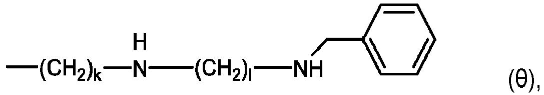

   und
R⁶ und R⁷, k und I wie oben definiert sind.

Das Organopolysiloxan hat unabhängig voneinander bevorzugt folgende Endgruppen: 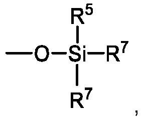 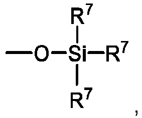 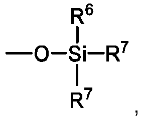 oder 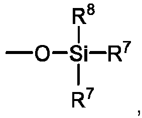 wobei
R⁵, R⁶, R⁷ und R⁸ wie oben definiert sind.

In einer bevorzugten Ausführungsform liegt der molare Anteil an Struktureinheit (i) im Organopolysiloxan im Bereich von 25-100 mol-%, stärker bevorzugt 50-100 mol-%, unter der Annahme, dass sämtliche Struktureinheiten im Organopolysiloxan insgesamt 100 mol% ergeben.

Ferner ist der molare Anteil an Struktureinheit (vi) bevorzugt im Bereich von 25-100 mol-%, stärker bevorzugt 50-100 mol-%.

In einer anderen Ausführungsform ist der molare Anteil der Struktureinheit (ii) im Organopolysiloxan im Bereich von 0-50 mol-%, stärker bevorzugt 0-30 mol-%.

Der molare Anteil der Struktureinheit (iii) kann im Bereich von 0-40 mol-%, bevorzugt 0-20 mol-% im Organopolysiloxan liegen.

Der molare Anteil der Struktureinheit (iv) und/oder (vii) liegt bevorzugt im Bereich von 0-20 mol-%, stärker bevorzugt 0-10 mol-%.

In einer Ausführungsform liegt der molare Anteil der Struktureinheit (v) im Bereich von 0-50 mol-%, bevorzugt 0-30 mol-%.

Das erfindungsgemäße Organopolysiloxan hat bevorzugt einen (protonierbaren) basischen Gesamtstickstoffgehalt von 0-3 Gew.-%, bevorzugt 0-1,5 Gew.-%, noch stärker bevorzugt von 0,01-0,05 Gew-%. Die Titration zur Bestimmung des basischen Stickstoffgehalts ist dem Fachmann bekannt.

In einem weiteren Aspekt betrifft die Erfindung ein Verfahren zur Herstellung eines erfindungsgemäßen Organopolysiloxans, umfassend die Schritte
a) Bereitstellen eines Organopolysiloxans und/oder Alkoxysilans mit NCO-reaktiven primären und/oder sekundären Amingruppen,
b) Umsetzen des Organopolysiloxans und/oder Alkoxysilans gemäß a) mit C₈₋₂₈-Alkylisocyanat; und
c) ggf. Hydrolyse/Kondensation des in Schritt b) erhaltenen Alkoxysilans zum Organopolysiloxan.

Insbesondere betrifft die Erfindung ein Verfahren zur Herstellung eines Organopolysiloxans umfassend die Schritte
a') Bereitstellen eines Organopolysiloxans mit NCO-reaktiven primären und/oder sekundären Amingruppen und
b') Umsetzen des Organopolysiloxans gemäß a') mit C₈₋₂₈-Alkylisocyanat, bevorzugt C₁₄₋₂₀-Alkylisocyanat, stärker bevorzugt C₁₆₋₁₈-Alkylisocyanat.

Alternativ oder ergänzend kann das Verfahren umfassen:
a") Bereitstellen eines Alkoxysilans mit NCO-reaktiven primären und/oder sekundären Amingruppen,
b") Umsetzen des Alkoxysilans gemäß a") mit C₈₋₂₈-Alkylisocyanat und
c") Hydrolyse/Kondensation des in Schritt b") erhaltenen Alkoxysilans zum Organopolysiloxan.

Das Organopolysiloxan gemäß Schritt a') kann durch Equilibrierung in Gegenwart von (C₁₋₅-Alkoxy)silanen mit mindestens einer NCO-reaktiven primären und/oder sekundären Amingruppe erhalten werden. Die Equilibrierungsreaktion ist bevorzugt basisch katalysiert und wird z. B. in EP 1 136 513 B1, Beispiel 1, beschrieben. Als Edukte können bei der Equilibrierungsreaktion Organooligo- oder Organopolysiloxane zusammen mit Alkoxysilanen mit mindestens einer NCO-reaktiven primären und/oder sekundären Amingruppe eingesetzt werden. Bevorzugt erfolgt die Equilibrierung in Gegenwart eines Organopolysiloxans enthaltend Struktureinheiten (ii), (iii), und/oder (v), bevorzugt in Gegenwart von Metallhydroxid und Wasser.

Alternativ können Organopolysiloxane durch Hydrolyse und Kondensation von Alkoxysilanen mit mindestens einer NCO-reaktiven primären und/oder sekundären Amingruppe erhalten werden. In der Hydrolysereaktion können weiterhin Alkoxysilane zugegen sein, die zu Struktureinheiten (ii), (iii) und/oder (v) führen. Um das Gleichgewicht bei der Hydrolyse auf die Produktseite zu verschieben, kann der entstehende Alkohol, ggf. unter reduziertem Druck, abdestilliert werden.

In dem erfindungsgemäßen Verfahren, ist das Alkoxysilan im Schritt a") bevorzugt ein (C₁₋₅-Alkoxy)silan mit mindestens einer NCO-reaktiven primären und/oder sekundären Amingruppe, stärker bevorzugt ausgewählt aus 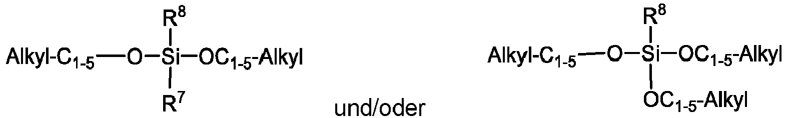 wobei R⁷ und R⁸ wie oben definiert sind.

Die Reaktion gemäß Schritt b') und b") zwischen dem linearen oder verzweigten C₈₋₂₈-Alkylisocyanat und der NCO-reaktiven primären und/oder sekundären Amingruppe erfolgt bevorzugt derart, dass das Alkylisocyanat unter Rühren zu den Aminogruppen zugegeben wird. Dabei kann die Reaktion in Substanz aber auch in Lösungsmittel, wie z. B. Ethylacetat, Isopropylacetat, Aceton, Tetrahydrofuran, Methylethylketon, Methylpropylketon, Toluol, Xylol, Dipropylenglykoldimethylether, Methoxypropylacetat, etc. durchgeführt werden. Zur Beschleunigung der Reaktion kann das Reaktionsgemisch ggf. bei 40-140 °C temperiert werden. Als Katalysator kommen insbesondere Di-n-butylzinndilaurat, Zinn(II)-octoat, Dibutylzinndiacetat, Kaliumoctoat, Zinkdilaurat, Bismuttrilaurat oder tertiäre Amine, wie 1,4-Diazabicyclo[2.2.2]octan, Dimethylcyclohexylamin, Dimethylaminopropyldipropanolamin, Pentamethyldipropylentriamin, N-Methylimidazol oder N-Ethylmorpholin in Betracht.

Die molare Stöchiometrie zwischen C₈₋₂₈-Alkylisocyanat und NCO-reaktiven primären oder sekundären Amingruppen wird bevorzugt so gewählt, dass 50-100 mol-%, bevorzugt 80-100 mol-%, besonders bevorzugt 90-100 mol-% der Aminogruppen mit den NCO-Gruppen des C₈₋₂₈-Alkylisocyanats abreagieren. Bei einer nichtstöchiometrischen Reaktion verbleiben daher protonierbare Aminogruppen im Organopolysiloxan. Der protonierbare basische Stickstoffgehalt liegt zwischen 0-3 Gew.-% (siehe oben).

Schritt c") erfolgt bevorzugt in Gegenwart eines Katalysators, bevorzugt KOH, NaOH, ggf. bei erhöhter Temperatur, z.B. 40-140°C.

Im Schritt c") wird das nach Schritt b") erhaltene Alkoxysilan hydrolysiert und anschließend kondensiert. In der Hydrolysereaktion können weiterhin Alkoxysilane zugegen sein, die zu Struktureinheiten (ii), (iii) und/oder (v) führen. Um das Gleichgewicht bei der Hydrolyse auf die Produktseite zu verschieben, kann der entstehende Alkohol, ggf. unter reduziertem Druck, abdestilliert/kondensiert werden.

In einem weiteren Aspekt betrifft die vorliegende Erfindung ein Organopolysiloxan erhältlich nach dem erfindungsgemäßen Verfahren.

In einem weiteren Aspekt betrifft die Erfindung eine Zubereitung umfassend
(1) mindestens ein Umsetzungsprodukt (S), erhältlich durch Umsetzen mindestens einer Verbindung (A) der 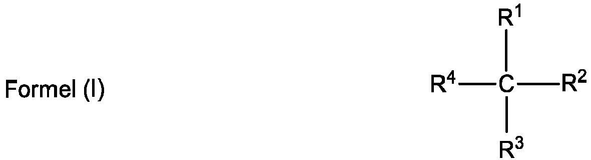 und/oder der 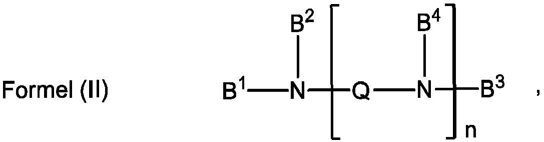 und/oder der 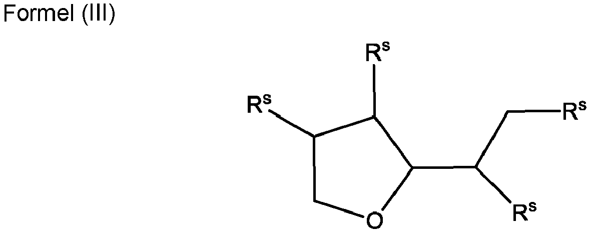 und/oder der 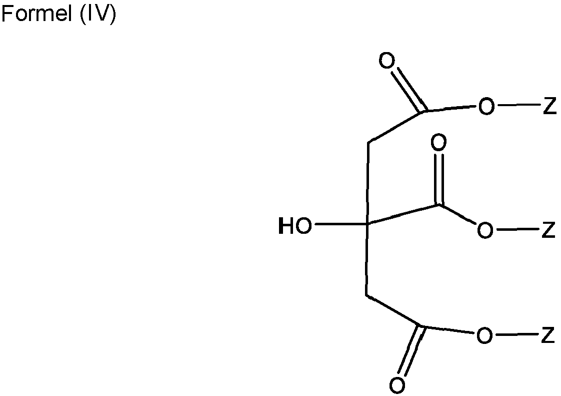
wobei R¹ = -X-Y-Z oder -Z ist, mit
X = -(CH₂)_{n"}-,
Y = 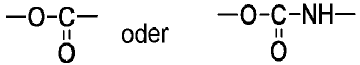
Z = -(CH₂)ₘ-CH₃ ,
R²= 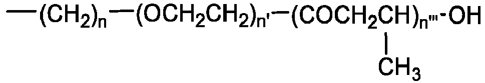 ist,
R³= -X-Y-Z, -Z oder -Y-Z ist, mit der Maßgabe, dass im Falle der Bedeutung -Y-Z im Rest R² n durch n" ersetzt ist,
R⁴= -X-Y-Z oder -(CH₂)_{n'}H ist,
B¹= -V-W-Z oder -Z ist,
mit
V = -(CH₂)_{n"}- oder 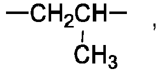 W = 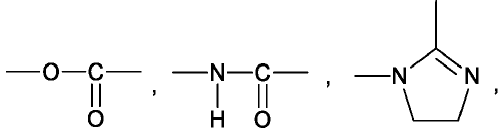 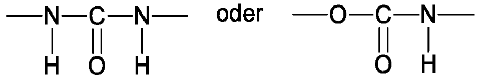 ist,
B² = -(CH₂)_{n"}-NH₂, oder 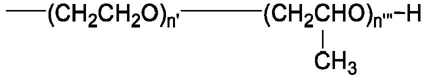 ist,
B³ = -V-W-Z, -Z oder 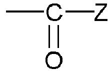 ist,
B⁴ = -V-W-Z oder 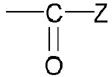 ist,
Q = -(CH₂)_{n"}- ist,
R^{s} unabhängig voneinander -OH, -YZ, 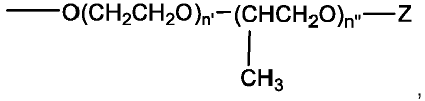 oder 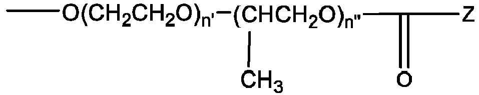 ist,
mit der Maßgabe, dass mindestens ein Rest R^{s} in der Formel (III) eine OH-Gruppe ist, und
n, n', n", n'" und m jeweils unabhängig voneinander eine ganze Zahl ist, mit

| | | |
|---|---|---|
| n | = | 0-2, |
| n' | = | 0-4, |
| n" | = | 1-4, |
| n'" | = | 0-4 und |
| m | = | 8-30, bevorzugt 12-26, stärker bevorzugt 14-22, |

mit mindestens einem nicht blockierten oder zumindest teilweise blockierten Di-, Tri- oder Polyisocyanat (IC), wobei der Anteil an freien Isocyanat (NCO)-Gruppen im Polyisocyanat (IC) zwischen 1,8 und 10 pro Mol liegt.
(2) mindestens ein erfindungsgemäßes Organopolysiloxan,
(3) ggf. mindestens ein nicht blockiertes oder zumindest teilweise blockiertes Di-, Tri- oder Polyisocyanat (IC),
(4) ggf. mindestens ein flüssiges Medium, insbesondere Wasser oder ein organisches Lösungsmittel und
(5) ggf. mindestens einen Emulgator.

Die erfindungsgemäße Zubereitung ist bevorzugt frei von Fluorverbindungen.

Die Zubereitung ist bevorzugt in Form einer Dispersion, bevorzugt in Form einer wässrigen Dispersion. Dabei ist der Feststoffgehalt der Dispersion bevorzugt 10-40 Gew.-%, stärker bevorzugt 15-30 Gew.%.

Das Umsetzungsprodukt (S) ist bevorzugt hydrophob. Der Ausdruck *"hydrophob"* im Sinne der vorliegenden Erfindung definiert Verbindungen, die sich typischerweise bei 20 °C in Wasser im Wesentlichen nicht lösen. Gesättigte Lösungen der *"hydrophoben"* Umsetzungsprodukte (S) enthalten bevorzugt bis zu 1 g gelöste Verbindung pro Liter Wasser (20 °C), stärker bevorzugt bis zu 0,5 g/l, noch stärker bevorzugt bis zu 0,2 g/l.

Das Umsetzungsprodukt (S) ist erhältlich durch Umsetzen mindestens einer Verbindung (A) mit mindestens einem nicht blockierten oder zumindest teilweise blockierten Di-, Tri- oder Polyisocyanat (IC).

Die Verbindung (A) der Formel (I) wird bevorzugt durch Umsetzung von mehrwertigen Alkoholen (a1) mit Carbonsäuren (b1) oder mit Alkylisocyanaten (b2) erhalten. Bevorzugte Beispiele für mehrwertige Alkohole (a1) sind Glycerin, Trimethylolethan, Trimethylolpropan, 1,2,4-Butantriol, Pentaerythrit oder Zucker, wie z.B. Glucose, bevorzugt Glycerin, Trimethylolethan, Trimethylolpropan, 1,2,4-Butantriol und/oder Pentaerythrit, stärker bevorzugt Glycerin.

Die Verbindung (A) der Formel (II) wird bevorzugt erhalten durch die Umsetzung von Alkanolamin (a2) und/oder Alkylamin (a3) mit Carbonsäure (b1) und/oder Alkylisocyanat (b2). Bevorzugte Alkanolamine (a2) sind 2-Amino-2,3-propandiol, 2-Amino-2-nnethyl-1,3-propandiol, Diethanolamin, Dipropanolamin, Diisopropanolamin, Ethanolpropanolamin, Triethanolamin, Triisopropanolamin, N,N,N',N'-Tetrakis(2-hydroxypropyl)ethylendiamin, Aminoethylethanolamin, Aminopropylethanolamin, Alkyltris(hydroxyethyl)propylendiamin, und Alkyldihydroxyethylamin mit bevorzugt 12-24 Kohlenstoffatomen im Alkylrest, sowie deren Ethoxylierungsprodukte. Besonders bevorzugt sind Diethanolamin, Diisopropanolamin, Triethanolamin, Triisopropanolamin, Aminoethylethanolamin und Aminopropylethanolamin, stärker bevorzugt Triethanolamin.

Beispiele für Alkylamine (a3) sind Bis(aminoethyl)amin, Bis(aminopropyl)amin und deren polymere Homologe, Aminoethylimminopropylamin, Bis(aminopropyl)ethylendiamin, Tris(amino-ethyl)amin, Tris(aminopropyl)amin, Trisaminononan, Aminopropylstearylamin und Aminopropylbisstearylamin. Dabei sind Bis(aminoethyl)amin, Bis(aminopropyl)amin, Aminoethylaminopropylamin, Bis(aminopropyl)ethylendiamin und Aminopropylstearylamin bevorzugt, insbesondere Bis(aminoethyl)amin.

Die zur Herstellung der Verbindung (A) verwendeten Carbonsäuren (b1) können gesättigt, ungesättigt, unverzweigt oder verzweigt sein und bevorzugt 10-32 Kohlenstoffatome, stärker bevorzugt 12-24 Kohlenstoffatome aufweisen. Bevorzugt werden unverzweigte, gesättigte Carbonsäuren mit bevorzugt 10-32 Kohlenstoffatomen, stärker bevorzugt 12-24 Kohlenstoffatomen, wie z.B. Caprin-, Undecan-, Laurin-, Myristin-, Palmitin-, Stearin-, Arachin- und Behensäure, verwendet. Dabei sind Laurin-, Palmitin-, Stearin- und Behensäure besonders bevorzugt.

Die zur Herstellung der Formel (I) und (II) verwendeten Alkylisocyanate (b2) sind bevorzugt unverzweigt, wobei der Alkylrest bevorzugt 9-31, insbesondere 11-23 Kohlenstoffatome aufweist. Ein besonders bevorzugtes Alkylisocyanat ist Stearylisocyanat.

Anstelle der unter Verwendung der mehrwertigen Alkohole (a1) oder der Alkanolamine (a2) oder der Alkylamine (a3) sowie der Carbonsäuren (b1) oder der Alkylisocyanate (b2) hergestellten Verbindung (A), können auch Verbindungen mit einem aktiven Wasserstoffatom und zwei hydrophoben Resten, wie beispielsweise Guerbet-Alkohole, Bis(dodecyl)amin und bevorzugt Bis(octadecyl)amin eingesetzt werden.

Bei Verbindungen der Formel (III) handelt es sich um Sorbitanester, die durch Umsetzung von Sorbitol mit C₁₀-C₃₂-Carbonsäuren, bevorzugt mit C₁₄-C₂₈-Carbonsäuren besonders bevorzugt mit C₁₆-C₂₄ Carbonsäuren unter Wasserabspaltung erhalten werden. Je nach Stöchiometrie können dabei Mono-, Di- oder Triester sowie Mischungen dieser entstehen. Gegebenenfalls können auch alkoxylierte Derivate eingesetzte werden. Für die Reaktion mit dem nichtblockierten oder zumindest teilweise blockierten Di-, Tri-, oder Polyisocyanat (IC) ist es notwendig das mindestens eine reaktive OH-Gruppe im Sorbitanester vorhanden ist. Desweiteren ist es möglich 1,4 -Sorbitanhydrid mit C₁₀-C₃₂-Alkylisocyanaten, bevorzugt mit C₁₄-C₂₈-Alkylisocyanaten, besonders bevorzugt mit C₁₆-C₂₄-Alkylisocyanaten umzusetzen um zu Verbindungen der Formel (III) zu gelangen.

Bei Verbindungen der Formel (IV) handelt es sich um Alkylcitrate die durch die Veresterung von Citronensäure mit langkettigen C₁₀-C₃₂-Alkoholen, bevorzugt mit C₁₄-C₂₈-Alkoholen besonders bevorzugt im C₁₆-C₂₄-Alkoholen erhalten werden.

Mindestens eine Verbindung (A) wird mit mindestens einem nichtblockiertem oder zumindest teilweise blockiertem Di-, Tri-, oder Polyisocyanat (IC) zum hydrophoben Umsetzungsprodukt (S) umgesetzt, wobei der Anteil an freien Isocyanat (NCO)-Gruppen im Polyisocyanat (IC) zwischen 1,8 und 10 pro Mol liegt. Beispiele für nichtblockierte oder teilblockierte Isocyanate werden in DE 100 17 651 A1, Absätze [0032] - [0037] beschrieben.

Besonders bevorzugte, nicht blockierte Di-, Tri- oder Polyisocyanate (IC) sind beispielsweise 2,4-Toluylendiisocyanat, 2,4'-Diphenylmethandiisocyanat, 4,4'-Diphenylmethandiisocyanat (MDI), höherkettige Homologe des Diphenylmethandiisocyanates (Polymer-MDI), 4- Methyl-cyclohexan-1,3-diisocyanat, Tetramethylendiisocyanat, Tetramethylendiisocyanat-Trimere, Hexamethylendiisocyanat, Hexamethylendiisocyanat-Trimere, Isophorondiisocyanat, Isophorondiisocyanat-Trimere, 2,2,4- oder 2,4,4-Trimethyl-1,6-hexamethylendiisocyanat, Dimerdiisocyanat, Mischungen, wie z.B. Mischungen aus MDI und Polymer-MDI, sowie Derivate davon. Dimerdiisocyanat ist erhältlich von der Firma Cognis Corp., 300 Brookside Avenue, Ambler, PA 19002, USA, unter der Bezeichnung DDI 1410.

Derivate der Isocyanate (IC) umfassen z.B. cyclisierte Oligo- oder Polyisocyanate. Die Herstellung cyclisierter Oligo- oder Polyisocyanate kann nach den bekannten Methoden der Cyclisierung gemäß W. Siefken (Liebigs Annalen der Chemie 562, 1949, Seiten 75-136) erfolgen, wobei die Oligo- oder Polyisocyanate offenkettig oder cyclisch vorliegen können. Derartige Derivate können aus den oben genannten Di-, Tri- und Polyisocyanaten durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminoxadiazindion-Strukturen hergestellt werden. Bevorzugt werden Hexamethylendiisocyanattrimere, Diphenylmethandiisocyanattrimere und Urethane aus 2,4- Toluylendiisocyanat verwendet, welche noch über freie NCO-Gruppen verfügen.

Es ist auch möglich, Teilmengen der Isocyanatgruppen mit Polyalkoxymonoalkylethern unter Zuhilfenahme entsprechender Katalysatorsysteme zu Urethanen zu derivatisieren, um die Emulgierbarkeit der Komponente (1) in Wasser zu verbessern. Es können hierbei Polyethylenglykolmonomethylether mit bevorzugt 4-20 Ethylenoxideinheiten, optional mit zusätzlichen 2-6 Propylenoxydeinheiten Verwendung finden. Als Katalysatoren können die dem Fachmann bekannten Systeme auf Basis tertiärer Amine und/oder zinnorganischer Verbindungen, wie beispielsweise Dibutylzinndilaurat, Dioctylzinndilaurat oder -diacetat verwendet werden.

Bevorzugte Derivate sind Hexamethylendiisocyanat-Trimere, DiphenylmethandiisocyanatTrimere, Urethane aus 2,4-Toluylendiisocyanat mit freien NCO-Gruppen, und mit Polyalkoxymonoalkylether modifiziertes Di-, Tri- oder Polyisocyanat (IC), insbesondere mit Polyethylenoxidmonoalkylether modifiziertes Di-, Tri- oder Polyisocyanat.

Alternativ zu den mittels Polyalkoxymonoalkylethern modifizierten Isocyanaten können tertiäre Alkanolamine als Zusatzstoffe Verwendung finden, um die kationische Ladung der Umsetzungsprodukte (S) und damit die selbstemulgierenden Eigenschaften ohne Beeinträchtigung der Gesamteigenschaften zu verbessern. Insbesondere geeignet ist hierbei Dimethylaminoethanol.

Das Isocyanat (IC) kann ferner teilweise oder vollständig blockiert sein (siehe beispielsweise DE 100 17 651 A1, Absatz [0042]). Bevorzugte Blockierungsmittel sind Natriumbisulfit, Methylethylketoxim, 3,5-Dimethylpyrazol, N-tert.-Butylbenzylamin, insbesondere 3,5-Dimethylpyrazol.

Die Blockierung erfolgt durch Umsetzung von Di-, Tri- oder Polyisocyanat (IC) mit dem Blockierungsmittel in der Schmelze oder in einem gegenüber Isocyanaten inerten organischen Lösemittel (LM), vorzugsweise unter einer Schutzgasatmosphäre und in Gegenwart eines geeigneten Katalysators, wie beispielsweise in EP 0 159 117 B1 oder DE 44 41 418 A1 beschrieben.

Das molare Verhältnis der freien NCO-Gruppen der zu blockierenden Di-, Tri- oder Polyisocyanate (IC) zu den reaktiven Gruppen des Blockierungsmittels liegt vorzugsweise in einem stöchiometrischen Überschuss bis zu 2:1, bevorzugt bis zu 3:1.

Zur Herstellung des Umsetzungsprodukts (S) wird das molare Verhältnis von freien Isocyanat (NCO)-Gruppen im Polyisocyanat (IC) zu isocyanatreaktiven Gruppen in Verbindung (A) auf 1:1 bis 1:1,3, bevorzugt 1 bis 1,1 eingestellt. Die isocyanatreaktiven Gruppen in Verbindung (A) sind bevorzugt Hydroxygruppen, primäre und/oder sekundäre Aminogruppen.

In einer bevorzugten Ausführungsform enthält die Zubereitung die Komponente (1) zu 10-90 Gew.-%, stärker bevorzugt 20-80 Gew.-%, noch stärker bevorzugt 25-65 Gew.-%, bezogen auf die Gesamtmasse der Komponenten (1) und (2).

Als Komponente (2) wird das erfindungsgemäße Organopolysiloxan (2) eingesetzt, welches oben ausführlich beschrieben ist.

In einer Ausführungsform macht die Komponente (2) 10-90 Gew.-%, bevorzugt 20-80 Gew.-%, stärker bevorzugt 30-70 Gew.-%, bezogen auf die Gesamtmasse der Komponenten (1) und (2) aus.

Der Zusatz der Komponente (3) in den erfindungsgemäßen Zubereitungen (Z) ist optional. Die für Komponente (3) geeigneten, nicht blockierten Di-, Tri- oder Polyisocyanate (IC) sind bereits oben bei der Herstellung des Umsetzungsproduktes (S) in Komponente (1) beschrieben. Verbindungen dieses Typs werden als Booster bezeichnet und sie bewirken auf den behandelten Flächengebilden eine Verbesserung der Wasserabweisung.

Gleichzeitig wird aufgrund der Polyfunktionalität des Polyisocyanats eine Vernetzung mit den auf den meisten Substraten immer vorhandenen -OH, -COOH oder -NH₂-Gruppen und nicht umgesetzten funktionellen Gruppen der Komponente (1) bewirkt, wodurch die Beständigkeit gegenüber Waschprozessen deutlich verbessert und die Resistenz gegenüber Abrasion erhöht wird.

Die Komponente (3) kann sowohl in nicht blockierter als auch in blockierter Form zur Verwendung gelangen. Die nicht blockierten Formen der Komponente (3) werden vorwiegend bei Anwendungen aus unpolaren Medien eingesetzt, weil hierbei eine unerwünschte, vorzeitige Umsetzung der freien NCO-Gruppen mit den reaktionsfähigen aktiven Wasserstoffatomen des Anwendungsmediums vermieden wird.

Sofern die Komponente (3) aus Anwendungsmedien auf Flächengebilde appliziert werden soll, welche NCO-reaktive Gruppen tragen, ist häufig ein Schutz dieser durch Blockierung mit geeigneten Blockierungsmitteln notwendig. In diesen Fällen erfolgt die Herstellung der Komponente (3) durch Verfahren, bei welchen die vollständige Blockierung der freien NCO-Gruppen von Di-, Tri- oder Polyisocyanaten mit einem Blockierungsagens und gegebenenfalls in einem organischen Lösemittel durchgeführt wird. Um eine vollständige Blockierung zu erzielen, wird üblicherweise ein geringer stöchiometrischer Überschuss an Blockierungsagens eingesetzt. Sofern Produkte für wässrige Anwendungen herzustellen sind, müssen die blockierten Di-, Tri- oder Polyisocyanate, gegebenenfalls gelöst in organischem Lösemittel, unter Verwendung geeigneter Emulgatoren (= Komponente (5)) in Emulsionsform übergeführt werden.

Beispiele für geeignete übliche und bekannte Blockierungsmittel sind aus der DE-A-100 17 651 A1, Absatz 0042 bekannt und bereits in der Beschreibung der Herstellung des Umsetzungsproduktes (S) in Komponente (1) beschrieben.

In einer besonderen Ausführungsform können als Booster solche nicht blockierten Di-, Tri- oder Polyisocyanate eingesetzt werden, deren Selbstemulgierfähigkeit in Wasser durch partielle Umsetzung der Isocyanatgruppen mit Polyalkoxymonoalkylethern unter Zuhilfenahme entsprechender Katalysatorsysteme zu Urethanen verbessert wird. Durch die Anknüpfung von hydrophilen Seitenketten an die Di-, Tri- oder Polyisocyanate wird der HLB-Wert des so hergestellten Urethans so günstig verändert, dass die an sich wasserunlösliche Verbindung selbstemulgierende Eigenschaften bekommt. Bei den hydrophilen Seitenketten ist eine gewisse Selektion von Art und Menge des Restes vorteilhaft. Bevorzugt gelangen zwischen 4 und 20 Ethylenoxidreste zur Verwendung, optional gemeinsam mit 2 - 6 Propylenoxidresten, wobei diese auch in Blöcken innerhalb der Alkoxykette vorliegen können. Bei solchen gemischt alkoxylierten Seitenketten überwiegt jedoch der Mengenanteil an Ethylenoxyd immer denjenigen des Propylenoxyds. Als Katalysatoren für die Urethansynthese können die dem Fachmann bekannten Systeme auf Basis tertiärer Amine und/oder zinnorganischen Verbindungen, wie beispielsweise Dibutylzinndilaurat, Dioctylzinndilaurat oder -diacetat verwendet werden.

Bei der Anwendung bilden die so hergestellten Urethane beim Eintrag in Wasser spontan feinteilige Emulsionen mit hoher Stabilität gegenüber Scherkräften und guter Verträglichkeit mit den anderen Komponenten einer Applikationsflotte. Wegen der Reaktivität der restlichen, nicht umgesetzten NCO-Gruppen mit Wasser sind bei diesen Spezialformen in der Applikationsflotte nur begrenzte Topfzeiten bis maximal 8 Stunden möglich.

Der Zusatz der Komponente (3) wird insbesondere in Fällen vorgenommen, wo besonders hohe Anforderungen an die Waschbeständigkeiten der behandelten Flächengebilde gestellt werden.

Vorzugsweise werden 0-50 Gew.-%, bevorzugt 1-35 Gew.-%, stärker bevorzugt 5-35 Gew.- %, der Komponente (3) bezogen auf die Gesamtmasse der Komponenten (1), (2) und (3) eingesetzt. Komponente (3) kann auch aus lösemittelhaltigen, wasserfreien Medien direkt und ohne Formulierungshilfsmittel eingesetzt werden.

Vorzugsweise werden 5-35 % von Komponente (3) eingesetzt, welche für die Anwendung aus lösungsmittelhaltigen, wasserfreien Medien direkt und ohne Formulierungshilfsmittel eingesetzt werden kann. Sofern die Applikation aus wässrigem Medium erfolgt, gelangen vorzugsweise Emulsionen der Komponente (3) mit 15-35 Gew.-% Feststoffanteil zum Einsatz, welche unter Verwendung von Emulgatoren (= Komponente (5)) auf Basis ethoxylierter Fettamine optional in quaternärer Form vorliegen, und ggf. anderen Emulgierhilfsmitteln, wie beispielsweise Solubilisierungsmitteln auf Basis Ethylenglykol, Propylenglykol, Dipropylenglykol, Dipropylenglykolmonomethylether, Mono- oder Diethylenglykolmonobutylether oder n-Methylpyrrolidon hergestellt werden. Die Emulgierung kann dabei unter Zuhilfenahme von Hochdruckhomogenisierungmaschinen erfolgen.

Die Komponente (4) ist optional. Das flüssige Medium ist bevorzugt Wasser oder ein organisches Lösungsmittel. Als geeignete organische Lösungsmittel werden bevorzugt inerte Lösungsmittel, wie z.B. Ester, z. B. Ethylactat, n-Propylacetat, Isopropylacetat, n-Butylacetat, Isobutylacetat oder Amylacetat, Ketone, z. B. Acetonmethylethylketon und gesättigte Kohlenwasserstoffe, wie z. B. n-Hexan, n-Heptan oder n-Oktan verwendet.

Die erfindungsgemäße Zubereitung (Z) kann ferner mindestens einen Emulgator umfassen. Komponente (5) ist insbesondere zu verwenden, wenn die Zubereitung in Form einer Suspension, insbesondere einer Dispersion oder Emulsion, vorliegt. Die Tenside gewährleisten eine möglichst homogene Verteilung der Phasen, insbesondere der ÖlPhase in der wässrigen Phase. Als Emulgator werden insbesondere nicht-ionische, kationische oder anionische Tenside verwendet. Bevorzugte nichtionische, anionische oder kationische Emulgatoren sind Ethoxylierungsprodukte von Fettsäuren, Fettsäureamiden, Fettalkoholen, Fettaminen, letztere kommen auch in Form ihrer Salze mit niedermolekularen organischen Säuren oder Mineralsäuren sowie quaternäre Ammoniumverbindungen wie beispielsweise Cetylbenzyldimethylammoniumchlorid und vorzugsweise ethoxyliertes Octadecylammoniumchlorid in Frage. Solche Emulgatoren sind beispielsweise im "Römpp Lexikon Chemie", 10. Auflage, 2. Band, Seite 1149 und 1150 beschrieben.

Gegebenenfalls wird der pH-Wert der Zubereitung mit mindestens einer Säure, ausgewählt aus organischer Säure, wie z.B. Essigsäure, Zitronensäure, oder Milchsäure, oder Mineralsäure, wie z.B. Salzsäure, etc., auf einen pH-Wert von 3 - 8 eingestellt.

Die Komponente (5) kann separat zugesetzt werden oder zusammen mit den Komponenten (1), (2), und ggf. (3) und ggf. (4) in die Zubereitung eingebracht werden. Die einzelnen Komponenten (1), (2) und gegebenenfalls (3) werden bevorzugt unter Verwendung der Komponente (5) als Lösung oder Suspension, z.B. Dispersion oder Emulsion, stärker bevorzugt Emulsion, stärker bevorzugt Öl-in-Wasser-Emulsion, separat hergestellt, und anschließend zur erfindungsgemäßen Zubereitung formuliert.

Die üblichen Anwendungsmengen der Komponente (5) liegen vorzugsweise bei 0-25 Gew.-%, bevorzugt 1-20 Gew.-%, stärker bevorzugt 2-15 Gew.%, bezogen auf die Gesamtmenge der Komponenten (1), (2), ggf. (3) und (5).

Zur Herstellung der Emulsionen werden die bekannten Methoden zur Bildung von Sekundäremulsionen angewendet. Üblicherweise liegt die emulgierte Temperatur oberhalb des Schmelzbereichs der Wirksubstanzen der verwendeten Komponenten (1), (2) und ggf. (3), vorzugsweise zwischen 50 und 80 °C. Um möglichst feinteilige, besonders stabile Emulsionen zu erzeugen, wird häufig zunächst eine grobteilige Voremulsion hergestellt, deren Partikel anschließend und unter Zuhilfenahme von Hochdruckhomogenisatoren auf die notwendige durchschnittliche Teilchengröße zwischen 0,1 und 10 µm verkleinert werden.

Sofern gewünscht, können die als Reaktionsmedium zur Herstellung der Komponenten (2) und ggf. (3) zugeführten inerten organischen Lösungsmittel, wie beispielsweise Ethylacetat, n-Propylacetat, i-Propylacetat, n-Butylacetat, i-Butylacetat oder Amylacetat nach der Emulgierung zur Vermeidung emittierfähiger organischer Kohlenwasserstoffe destillativ entfernt werden.

Ein weiterer Gegenstand der Erfindung, ist die Verwendung der erfindungsgemäßen Zubereitung und des erfindungsgemäßen Organopolysiloxans als Hydrophobierungsmittel, insbesondere als Hydrophobierungsmittel auf Flächengebilden oder Fasern, wie z. B. textilen Substraten, linienförmigen Textilien, wie z. B. Garnen, Zwirnen oder Seilen, Papier, Leder und mineralischen Flächengebilden.

Die Zubereitung oder das Organopolysiloxan wird vorzugsweise zur Hydrophobierung auf die Flächengebilde mit Auflagen von 0,5-3 Gew.-%, vorzugsweise 0,5-2,5 Gew.-%, besonders bevorzugt 0,5-2,0 Gew.-% der Festsubstanz der erfindungsgemäßen Zubereitung bezogen auf das Gewicht des zu behandelnden Flächengebildes aufgetragen. Üblicherweise wird eine Flotte in der gewünschten Konzentration mittels einer Zwangsadministration aus wässrigem Medium auf dem Foulard mit Flottenaufnahmen von 40-100 %, anschließender Vortrocknung bei 80-110 °C und einer nachfolgenden Heißbehandlung bei 130-170 °C während 1-5 Minuten vorgenommen. Die Dauer der Hitzebehandlung ist jeweils abhängig von den angewandten Temperaturen.

Fasern im Sinne der vorliegenden Erfindung sind Naturfasern, sowie Kunstfasern. Naturfasern sind bevorzugt Baumwolle, Wolle oder Seide. Synthetische Fasern oder Kunstfasern werden synthetisch aus natürlichen oder synthetischen Polymeren hergestellt und sind bevorzugt Regeneratfasern, Polyester, Polyolefin, bevorzugt Polyethylen oder Polypropylen, stärker bevorzugt Polypropylen, Polyamid, Polyaramid, wie z. B. Kevlar oder Nomex, Polyacrylnitril, Elasthan oder Viskose.

Ein Textil im Sinne der Erfindung ist aus mehreren Fasern hergestellt. Bevorzugt ist das Textil linienförmig oder flächig. Unter "*linienförmigem Textil"* wird beispielsweise ein Garn, ein Zwirn oder ein Seil verstanden. Flächige Textilien sind bevorzugt Fleece, Filze, Gewebe, Gewirke und Geflechte. Erfindungsgemäß können Textilien auch Mischungen von Naturfasern und synthetischen Fasern enthalten. Besonders bevorzugt sind Flächengebilde aus textilen Substraten, wie z. B. Gewebe, Gewirke, formverfestigte Fasern, Fleece ("*non-woven*")*.*

Bei der Anwendung auf textilen Flächengebilden können die erfindungsgemäßen Zubereitungen auch mit den in der Textilindustrie üblichen Textilhilfsmitteln kombiniert werden. Hervorzuheben sind Mittel, welche die Entknitterungseigenschaften verbessern, beispielsweise Methylolverbindungen des Dihydroxyethylenharnstoffes oder Methylolmelaminether unterschiedlichen Methylolierungsgrades. Ferner kommen als Textilhilfsmittel solche in Betracht, welche die Flammfestigkeit verbessern oder dem Flächengebilde einen bevorzugten Griff verleihen. Der gewünschte Warengriff kann jedoch allein durch die erfindungsgemäße Kombination der Komponenten (1)-(3) eingestellt werden, weshalb in diesen Fällen auf weitere Textilhilfsmittel verzichtet werden kann.

Die Flächengebilde können auch aus Papier bestehen, welches nach den bekannten Papiermachermethoden und aus allen in diesem Anwendungsbereich üblichen Grundstoffen hergestellt sein kann. Die erfindungsgemäßen Zubereitungen können dabei entweder als Zusatz zur Papiermasse oder durch Auftrag auf die Oberfläche des maschinenglatten Papiers mittels Streichanlagen unter Anwendung von Walzen-, Rakel- oder Luftbürstenstreichverfahren und anschließender Infrarot-, Heißluft- oder Zylindertrocknung angewendet werden.

Flächengebilde aus Leder sind ebenfalls gut für die Appretur mit den erfindungsgemäßen Zubereitungen und Organopolysiloxanen geeignet. Sofern die Anwendung in den der Gerberei nachgeschalteten Zurichtungsprozessen erfolgt, kann dies mit den bekannten Auftragsverfahren oder durch Sprühen oder Tränken erfolgen.

Die Behandlung anderer Flächengebilde ist ebenfalls möglich. So können mineralische Flächengebilde, wie z.B. nicht lasierte Fliesen, Keramikteile oder auch Wandflächen durch Tränken mit der erfindungsgemäßen Appreturflotte hervorragende Wasserabweisung erhalten.

In einer anderen Ausführungsform kann die erfindungsgemäße Zubereitung oder das erfindungsgemäße Organopolysiloxan als Additiv in Farben, Lacken oder Putzen eingesetzt werden. Üblicherweise liegt der Anteil an der erfindungsgemäßen Zubereitung oder de Organopolysiloxan bei 1-10 Gew.-% Festsubstanz bezogen auf die Gesamtzusammensetzung.

In einem weiteren Aspekt betrifft die Erfindung ein Verfahren zur Hydrophobierung von Substraten, umfassend Aufbringen der erfindungsgemäßen Zubereitung oder des Organopolysiloxans auf ein Substrat, insbesondere auf ein Flächengebilde, stärker bevorzugt auf ein textiles Substrat, Papier, Leder oder mineralisches Substrat.

Die Behandlung der Flächengebilde kann durch verschiedene Methoden erfolgen, z. B. durch Applikation einer Flotte der erfindungsgemäßen Zubereitung oder des Organopolysiloxans mittels Sprühen, Pflatschen, Pinsel oder Schwammauftrag, Tauchen, Tränken, Streichen, ggf. auch in Schaumform.

Im Allgemeinen werden Auflagen von 0,5-3 Gew.-%, bevorzugt jedoch 0,5-2,5 Gew.-%, stärker bevorzugt 0,5-2,0 Gew.-% der Festsubstanz der erfindungsgemäßen Zubereitung oder des Organopolysiloxans bezogen auf das Gewicht des zu behandelnden Flächengebildes verwendet.

Alternativ kann die Zubereitung/Organopolysiloxan mittels Zwangsapplikation oder im Ausziehverfahren auf ein textiles Substrat aufgebracht werden.

Weiterhin kann die Zubereitung/Organopolysiloxan zur Nachbehandlung gewaschener Textilien verwendet werden.

Viele konfektionierte Artikel werden entweder im häuslichen Bereich in Haushaltswaschmaschinen oder in Industriewaschmaschinen gewaschen. Letzteres trifft in hohem Ausmaß auf die Berufsbekleidung von Mitgliedern der Feuerwehr, Polizei, Militär und anderen Berufszweigen zu, welche sich häufig im Freien aufhalten müssen und damit der Witterung ausgesetzt sind. Die üblicherweise öl-, wasser- und schmutzabweisend appretierten Kleidungsstücke erleiden durch die Wäsche einen Verlust dieser Eigenschaften. Häufig werden daher durch eine Nachbehandlung mit Phobiermitteln diese Eigenschaften wieder aufgefrischt. Die erfindungsgemäßen Zubereitungen können für diese Anwendung Einsatz finden.

Die Behandlung der industriell gewaschenen, konfektionierten Artikel erfolgt in der Wasch- bzw. Schleudertrommel durch Aufgießen einer Flotte der erfindungsgemäßen Zubereitungen auf die schleuderfeuchten Waschartikel und anschließendes Trocknen im Tumbler. Bei Haushaltswaschmaschinen kann die Appretur mittels des üblichen Nachbehandlungsspülganges oder eines Dosierkugelsystems erfolgen.

Weiterer Gegenstand der Erfindung ist die Anwendung der erfindungsgemäßen Zubereitungen als Appretur auf Flächengebilden mit der Maßgabe, dass die Anwendung aus organischen Lösungsmitteln im Tränk- oder Tauchverfahren erfolgt.

Viele Kleidungsstücke werden nicht gewaschen, sondern einer Reinigung in organischen Lösemitteln unterzogen. Ähnlich wie bei der Nachbehandlung gewaschener Artikel können auch hier durch Auffrischen mit Produkten auf Basis der erfindungsgemäßen Organopolysiloxane und Zubereitungen die hydrophoben Eigenschaften wiederhergestellt werden.

Die Behandlung der in organischen Lösemitteln gereinigten, konfektionierten Artikel erfolgt in der Reinigungstrommel der chemischen Reinigungsmaschinen durch Aufgießen oder Aufsprühen einer Flotte der erfindungsgemäßen Zubereitungen auf die schleuderfeuchten, gereinigten Artikel und anschließendes Entfernen der Lösemittel im Tumbler bei erhöhten Temperaturen. Dabei ist der chemische Charakter des reinigenden Agens unerheblich, d.h. die Behandlung kann sowohl auf modernen Maschinen in geschlossenen Systemen mit Perchlorethylen erfolgen oder auf solchen, welche für die Behandlung mit Lösungsmitteln auf Kohlenwasserstoffbasis, wie beispielsweise Isopar J geeignet sind.

Weiterer Gegenstand der Erfindung ist die Anwendung der erfindungsgemäßen Zubereitungen/Organopolysiloxane als Appretur auf Flächengebilden mit der Maßgabe, dass die Anwendung aus organischen Lösemitteln mittels Sprühmethoden erfolgt.

Anstelle einer Behandlung textiler Flächengebilde nach Wasch- oder Reinigungsprozessen durch Auftrag der erfindungsgemäßen Zubereitungen/Organopolysiloxane aus kontinuierlichen, wässrigen- oder lösemittelhaltigen Flotten kann für die Anwendung im häuslichen Bereich (Consumer Care Bereich) die Applikation der erfindungsgemäßen Zubereitungen auch mittels diverser Sprühmethoden vorgenommen werden. Hierfür werden Phobiermittel, formuliert in organischen Lösungsmitteln und Treibgasen aus Sprühdosen oder durch Pumpmechanismen angeboten. Insbesondere für den Schuhpflegebereich ist erhebliche Verbesserung der Wasserabweisung und damit des Tragekomforts zu erzielen.

### Beispiele

Die nachfolgenden Beispiele erläutern die Erfindung. Die Applikation der Appreturen auf textilen Flächengebilden erfolgte auf einem Laborfoulard der Type LFV 350/2 "RFA" (Fa. Benz, Schweiz) mit nachfolgender Trocknung und Heißbehandlung auf einem Laborspannrahmen der Type TKF 15/M 350 (Fa. Benz, Schweiz). Die Bestimmung der Flottenaufnahme erfolgte durch Auswiegen der appretierten Testmuster vor und nach der Applikation.

Die Prüfung der hydrophoben Effekte erfolgte nicht unmittelbar nach der Applikation, sondern erst nach einer Konditionierung der Substrate im Normklima (ISO 139) während 24 Stunden, um Einflüsse auf diese Eigenschaften durch Übertrocknung zu nivellieren. Auflagemengen sowie die Bedingungen der Heißbehandlung sind gemeinsam mit den zu erzielenden Phobiereffekten in den Tabellen 3a bis 3c aufgeführt.

Die Wasserabweisung wurde auf den textilen Flächengebilden mittels Spraytest gemäß AATCC Standard Test Method 22 getestet. Die Prüfung gemäß AATCC Standard Test Method 22 erfolgt durch Aufsprühen von destilliertem Wasser unter kontrollierten Bedingungen auf das zu testende textile Substrat und anschließenden visuellen Vergleich des Benetzungsmusters zu Bildern eines in der Testmethode aufgeführten Beurteilungsstandards. Die angegebenen Zahlenwerte beziehen sich dabei auf das Erscheinungsbild der Oberfläche nach dem Aufsprühen des Wassers und haben folgende Bedeutung:

| | | |
|---|---|---|
| 100 | = | Kein Anhaften von Wassertropfen oder Benetzung der oberen Oberfläche |
| 90 | = | Vereinzeltes Anhaften von Wassertropfen oder Benetzung der oberen Oberfläche |
| 80 | = | Benetzung der oberen Oberfläche an den Auftreffpunkten des Wassers |
| 70 | = | Teilweise Benetzung der ganzen oberen Oberfläche |
| 50 | = | Vollständige Benetzung der ganzen oberen Oberfläche |
| 0 | = | Vollständige Benetzung der ganzen oberen und unteren Oberfläche (Durchnetzung). |

Um die Beständigkeit der appretierten Flächengebilde gegenüber Waschprozessen zu prüfen, wurden die Testmuster gemäß DIN EN ISO 6330:2013 bei 60°C gewaschen und anschließend nach Trocknungsverfahren A bzw. F getrocknet (s. Tab. 3a & 3c).

Um die Widerstandsfähigkeit der hydrophoben Ausrüstung gegenüber Abrieb zu untersuchen, wurde zunächst die Wasserabweisung der Muster im Original Zustand mittels Spraytest (AATCC Standard Test Method 22) bestimmt. Anschließend wurden die Muster in Anlehnung an die Scheuerprüfung nach DIN EN ISO 12947-2 gescheuert. Dazu wurden die jeweiligen Muster in einem Martindale Prüfinstrument eingespannt und ein Gewirke mit einer Belastung von 790 kg (entspricht einem Nenndruck von 12 kPa) für 2000 Touren gegen die Muster gescheuert. Nach erfolgtem Scheuern, wurde der hydrophobe Effekt der Muster erneut mittels Spraytest (AATCC Standard Test Method 22) bestimmt (s. Tab. 3a).

Um den Einfluss der Hydrophobierungsmittel auf die flammhemmende Wirkung von speziellen Fasern zu untersuchen, wurden die Testmuster gemäß DIN 4102, Teil 1 (Baustoffklasse B2: normalentflammbare Baustoffe) geprüft (s. Tab. 3b). Dazu wird das Textil über der Flamme aufgespannt und beobachtet, ob die Flammenspitze die Messmarke in einer Höhe von 15 cm innerhalb von 20 s erreicht oder nicht (Brennzeit der Flamme: 15 s). Diese Prüfung wird insgesamt je fünf Mal in Kett- und Schussrichtung des Textils durchgeführt.

Folgende kommerziell erhältlichen Produkte wurden verwendet:
**Borchi Kat 24:** vielseitiger Bismuth Carboxylat Katalysator, IMCD Deutschland GmbH
**RUCO-LINK XCR:** Feststoffgehalt 25%, wässrige Emulsion eines 3,5-Dimethylpyrazolblockierten aliphatischen Polyisocyanates; Rudolf GmbH
**Ethoquad HAT/25:** Polyoxyethylen(15)(hydrierter Talg)methylammoniumchlorid, Julius Hoesch GmbH & Co. KG
**Disponil A 1080:** Fettalkoholethoxylat (C_{12/14}, 10 EO), Feststoffgehalt 80%, BASF
**Arquad 2C75:** Dikokosdimethylammoniumchlorid in Isopropanol, Feststoffgehalt 75%, Julius Hoesch GmbH & Co. KG

### Beispiele zur Herstellung der Komponente (1)

### Verbindung (A):

Allgemeine Herstellungsvorschrift für Verbindung (A) der Formel (I), (II), (III) und/oder (IV)

In einem geeignet dimensionierten Dreihalskolben, ausgestattet mit Destillationskühler, regelbarem Rührer und Innenthermometer werden die in den Tabellen 1a angegebenen Komponenten (a1, a2 oder a3) und (b1) in den dort angegebenen Mengen in Gramm unter Schutzgas und Rühren aufgeschmolzen. Anschließend wird das Gemisch auf die in den Tabellen 1a und 1b angegebene Endtemperatur (T) aufgeheizt und solange weitergerührt bis kein Reaktionswasser mehr abdestilliert und die in den Tabellen 1a genannte Säurezahl (SZ) erreicht ist. Bedarfsweise kann bei den Veresterungsreaktionen 0,1 % Schwefelsäure als Katalysator zugesetzt werden. Bei den Amidierungsreaktionen ist kein Zusatz von Katalysator notwendig. Das resultierende Kondensationsprodukt wird ausgegossen und nach dem Abkühlen zu Schuppen verarbeitet.

### Verbindung (A):

### Besondere Herstellungsvorschrift für Verbindung (A) der Formel (I) und/oder (II) unter Verwendung von Alkylisocyanaten (b2) und Weiterverarbeitung zum Umsetzungsprodukte (S)

In einem geeignet dimensionierten Dreihalskolben, ausgestattet mit Rückflußkühler, regelbarem Rührer, Innenthermometer und Tropftrichter werden die in der Tabelle 1a angegebenen Komponenten (a1) und (b2) in Gramm in Isopropylacetat (Lösungsmittel (LM)) vorgelegt. Anschließend werden, bezogen auf die Gesamtmenge der Komponenten, 0,05 % 1,4-Diazabicylo(2,2,2)octan als Katalysator zugesetzt und die Mischung solange bei 80°C gerührt, bis im IR-spektrum keine NCO-Bande mehr erkennbar ist.

Anschließend wird dem Gemisch zur Herstellung des Umsetzungsproduktes (S) die in den Tabellen 1a angegebenen Mengen in Gramm von Komponente (IC) zugegeben und solange bei 80°C weitergerührt, bis im IR-spektrum keine NCO-Bande mehr erkennbar ist.

### Umsetzungsprodukte (S) (= Komponente (1)):

### Allgemeine Herstellungsvorschrift für Umsetzungsprodukte (S) aus einer Verbindung (A) und nicht blockierten oder teilblockierten Di-, Tri- oder Polyisocyanaten (IC)

In einem geeignet dimensionierten Dreihalskolben, ausgestattet mit Rückflußkühler, regelbarem Rührer, Innenthermometer und Tropftrichter werden die in den Tabellen 1a und 1b angegebenen Komponenten (A) und die Komponenten (IC) in den dort angegebenen Mengen in Gramm in Isopropylacetat (LM) vorgelegt. Anschließend werden, bezogen auf die Gesamtmenge der Komponenten, 0,05 % 1,4-Diazabicylo(2,2,2)octan als Katalysator zugesetzt und die Mischung solange bei 65°C gerührt, bis im IR-spektrum keine NCO-Bande mehr erkennbar ist.

### Besondere Herstellungsvorschrift für die in den Emulsionen (E) 3 und 9 eingesetzten Umsetzungsprodukte (S)

Zur Herstellung der Emulsion (E) 3 gemäß Tabelle 1a wird ein Umsetzungsprodukt (S) verwendet, bei dessen Herstellung (Reaktion der Verbindung (A) mit dem Isocyanat (IC)) noch die in der Tabelle 1a angegebenen Menge in Gramm Dimethylaminoethanol zugesetzt werden.

Zur Herstellung der Emulsion (E) 9 gemäß Tabelle 1a wird ein Umsetzungsprodukt (S) verwendet, bei dessen Herstellung (Reaktion der Verbindung (A) mit dem Isocyanat (IC)) noch die in der Tabelle 1a angegebenen Menge in Gramm Bisoctadecylamin zugesetzt werden.

### Emulsionen (E):

### Allgemeine Herstellungsvorschrift für Emulsionen (E) aus Komponente (1) bzw. den Umsetzungsprodukten (S) und Komponente (2)

Ölige Phase: In einem geeignet dimensionierten Becherglas werden die in Tabelle 1a angegebenen Mengen in Gramm von Umsetzungsprodukt (S), vorliegend im vorstehend genannten Isopropylacetat und der Komponente (2) vorgelegt und unter Rühren auf 65 - 70°C aufgeheizt, bis sich eine klare, homogene Lösung ergibt. Das zu verwendende Umsetzungsprodukt (S) muss gegebenenfalls vor der Anwendung bei 65 - 70°C aufgeschmolzen werden, um ein homogenes Produkt zu erhalten.

Wässrige Phase: In einem geeignet dimensionierten Becherglas werden die in den Tabellen 1a angegebenen Mengen in Gramm an Emulgatoren (Em) (= Komponente (5)) in der angegebenen Menge Wasser bei 65°C gelöst.

Unter einem Schnellrührerwerden beide Phasen zu einer grobteiligen Voremulsion verrührt und anschließend bei 65°C auf der Hochdruckhomogenisiermaschine bei 300 - 500 bar homogenisiert, bis eine durchschnittliche Teilchengröße zwischen 0,1 und 10 Mikrometer erreicht ist. Anschließend wird das Lösemittel (LM) auf dem Rotationsverdampfer im Vakuum durch azeotrope Destillation entfernt. Gegebenenfalls wird der pH-Wert der erhaltenen Emulsion mit Essigsäure 60%ig auf 5 - 7 eingestellt, die erhaltene weiße Emulsion über ein Filter mit 20 Mikrometer filtriert und mit Wasser auf einen Feststoffgehalt von 25 % eingestellt.

### Beispiele zur Herstellung der Komponente (2)

### Organopolysiloxan (2-1)

11,1 g (0,13 mol) eines Aminogruppen-enthaltenden Organopolysiloxans (I) werden unter Stickstoffatmosphäre mit 49,7 g Isopropylacetat versetzt. In diesem Gemisch werden unter Rühren 0,06 g Borchi Katalysator gelöst. Anschließend werden 39,1 g (0,13 mol) Stearylisocyanat portionsweise zugegeben, sodass die Exothermie gut gehandhabt werden kann. Nach Abklingen der Exothermie wird das Reaktionsgemisch noch 2 h auf 80 °C erhitzt. Wenn kein Isocyanat mehr nachweisbar ist (IR), wird das Reaktionsgemisch abgekühlt. Man erhält 94,3 g einer Verbindung, welche keinen protonierbaren basischen Stickstoff mehr enthält. Die Verbindung wird zur Herstellung der Emulsionen (E) 1, 4 & 7 in Tabelle 1a verwendet.

### Aminogruppen-enthaltendes Organopolysiloxan (I):

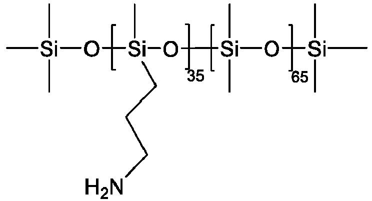

### Organopolysiloxan (2-2)

12,4 g (0,13 mol) eines Aminogruppen-enthaltenden Organopolysiloxans (II) werden unter Stickstoffatmosphäre mit 49,0 g Isopropylacetat versetzt. In diesem Gemisch werden unter Rühren 0,06 g Borchi Katalysator gelöst. Anschließend werden 38,5 g (0,130 mol) Stearylisocyanat portionsweise zugegeben, sodass die Exothermie gut gehandhabt werden kann. Nach Abklingen der Exothermie wird das Reaktionsgemisch noch 2 h auf 80 °C erhitzt. Wenn kein Isocyanat mehr nachweisbar ist (IR), wird das Reaktionsgemisch abgekühlt. Man erhält 92,8 g einer Verbindung, welche keinen protonierbaren basischen Stickstoff mehr enthält. Die Verbindung wird zur Herstellung der Emulsionen (E) 2, 5 & 9 in Tabelle 1a verwendet.

### Aminogruppen-enthaltendes Organopolysiloxans (II):

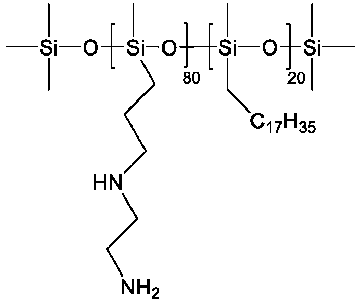

### Organopolysiloxan (2-3)

16,6 g (0,12 mol) eines Aminogruppen-enthaltenden Organopolysiloxans (III) werden unter Stickstoffatmosphäre mit 52,5 g Isopropylacetat versetzt. In diesem Gemisch werden unter Rühren 0,07 g Borchi Katalysator gelöst. Anschließend werden 30,9 g (0,10 mol) Stearylisocyanat portionsweise zugegeben, sodass die Exothermie gut gehandhabt werden kann. Nach Abklingen der Exothermie wird das Reaktionsgemisch noch 2 h auf 80 °C erhitzt. Wenn kein Isocyanat mehr nachweisbar ist (IR), wird das Reaktionsgemisch abgekühlt. Man erhält 96,7 g einer Verbindung welche 0,54 Gew. % protonierbaren basischen Stickstoff enthält. Die Verbindung wird zur Herstellung der Emulsionen (E) 3, 6 & 8 in Tabelle 1a verwendet.

### Aminogruppen-enthaltendes Organopolysiloxan (III):

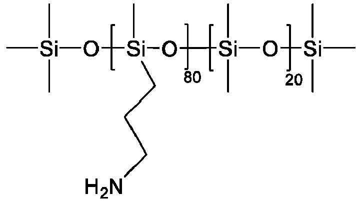

### Herstellung der erfindungsgemäßen Zubereitungen (Z)

Die in der Tabelle 2a aufgeführten Emulsionen (E), enthaltend die Komponenten (1), (2) und (5), werden gegebenenfalls mit der Komponente (3) und gegebenenfalls mit Wasser in den angegebenen Gewichtsverhältnissen gemischt, wobei die in den Tabelle 2a genannten Zubereitungen (Z) erhalten werden.

Die in der Tabelle 2b beschriebenen Zubereitungen Z 19 - Z 20 (nicht erfindungsgemäß) wurden mit Emulsionen aus den Patenten WO 2008/135208 A1 (Zusammensetzung gemäß Beispiel 5 aus Tab. 1a) anstelle der Emulsionen mit Komponente (2) hergestellt und dienen zum Vergleich.

### Appreturbeispiele

### Anwendung von Zubereitungen (Z) auf wässriger Basis auf textilen Flächengebilden:

Ausrüstungskonditionen und Prüfergebnisse sind in den Tabellen 3a, 3b und 3c aufgeführt.

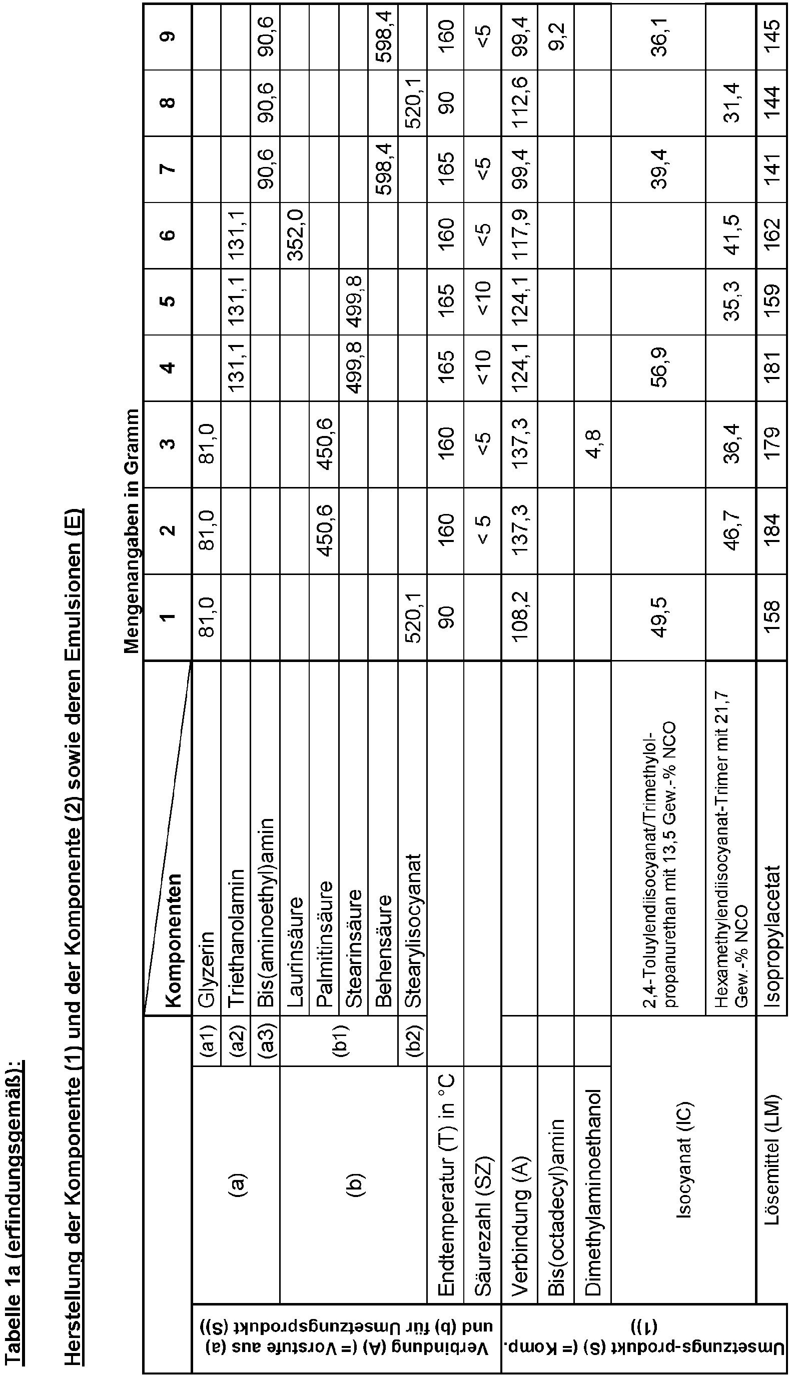

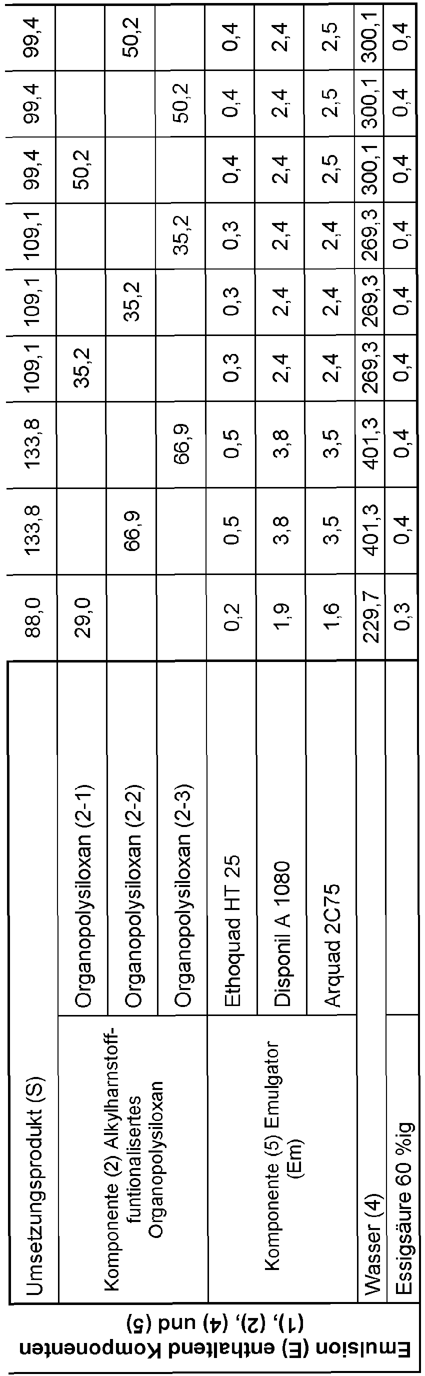

**Tabelle 2a:**

| **Mischungsverhältnisse der erfindungsgemäßen Zubereitungen (Z)** | | | |
|---|---|---|---|
| **Gew.Teile Emulsion (E), enthaltend Komponente (1), (2), (4) und (5)** | **Gew.Teile Komponente (3) RUCO-LINK XCR** | **Gew.Teile Wasser** | **Zubereitung (Z)** |
| 80 von (E) 1 | - | 20 | 1 (erfindungsgemäß) |
| 80 von (E) 1 | 20 | - | 2 (erfindungsgemäß) |
| 80 von (E) 2 | - | 20 | 3 (erfindungsgemäß) |
| 80 von (E) 2 | 20 | - | 4 (erfindungsgemäß) |
| 80 von (E) 3 | - | 20 | 5 (erfindungsgemäß) |
| 80 von (E) 3 | 20 | - | 6 (erfindungsgemäß) |
| 80 von (E) 4 | - | 20 | 7 (erfindungsgemäß) |
| 80 von (E) 4 | 20 | - | 8 (erfindungsgemäß) |
| 80 von (E) 5 | - | 20 | 9 (erfindungsgemäß) |
| 80 von (E) 5 | 20 | - | 10 (erfindungsgemäß) |
| 80 von (E) 6 | - | 20 | 11 (erfindungsgemäß) |
| 80 von (E) 6 | 20 | - | 12 (erfindungsgemäß) |
| 80 von (E) 7 | - | 20 | 13 (erfindungsgemäß) |
| 80 von (E) 7 | 20 | - | 14 (erfindungsgemäß) |
| 80 von (E) 8 | - | 20 | 15 (erfindungsgemäß) |
| 80 von (E) 8 | 20 | - | 16 (erfindungsgemäß) |
| 80 von (E) 9 | - | 20 | 17 (erfindungsgemäß) |
| 80 von (E) 9 | 20 | - | 18 (erfindungsgemäß) |

**Tabelle 2b:**

| **Nicht erfindungsgemäße Zubereitungen (Z)** | | | |
|---|---|---|---|
| **Produkte** | **Gew.Teile Komponente (3) RUCO-LINK XCR** | **Gew.Teile Wasser** | **Zubereitung (Z)** |
| 80 Beispiel 5 aus WO 2008/135208 A1 | - | 20 | 19 (nicht erfindungsgemäß) |
| 80 Beispiel 5 aus WO 2008/135208 A1 | 20 | - | 20 (nicht erfindungsgemäß) |

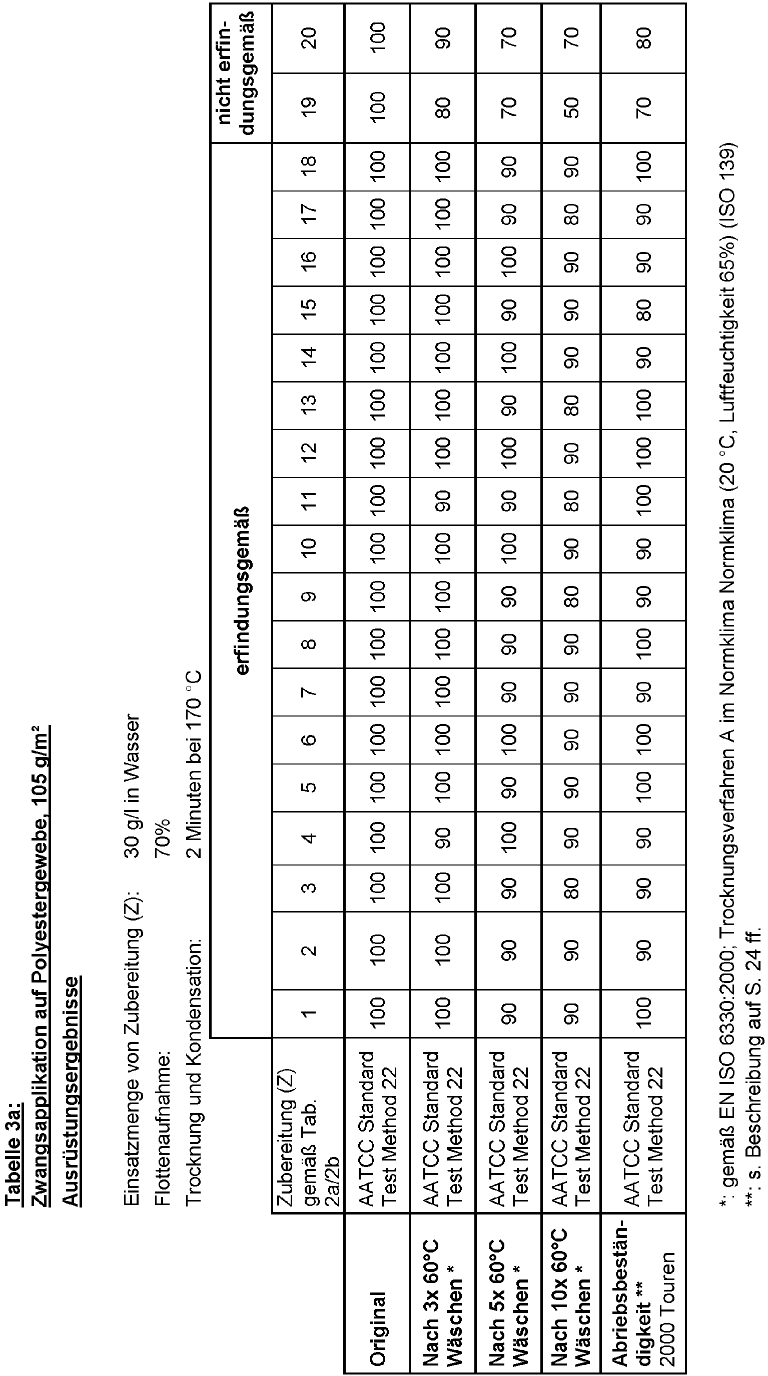

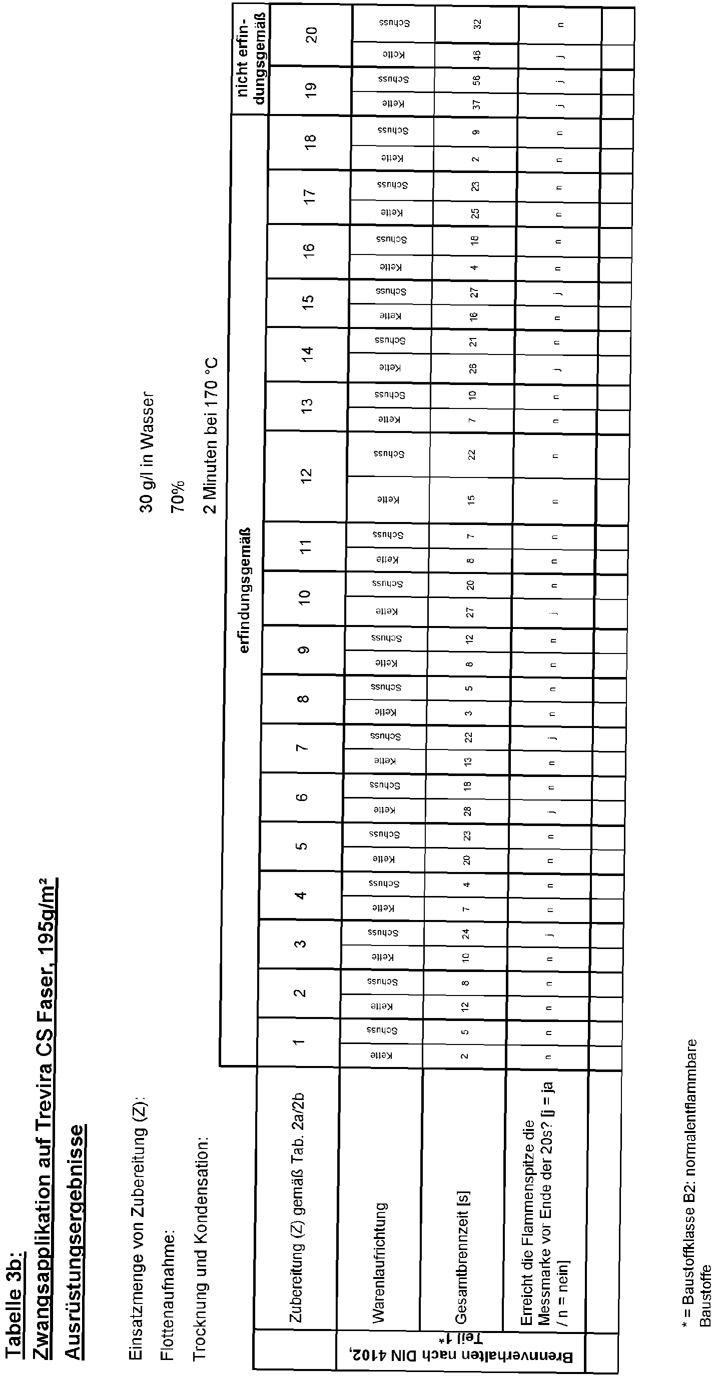

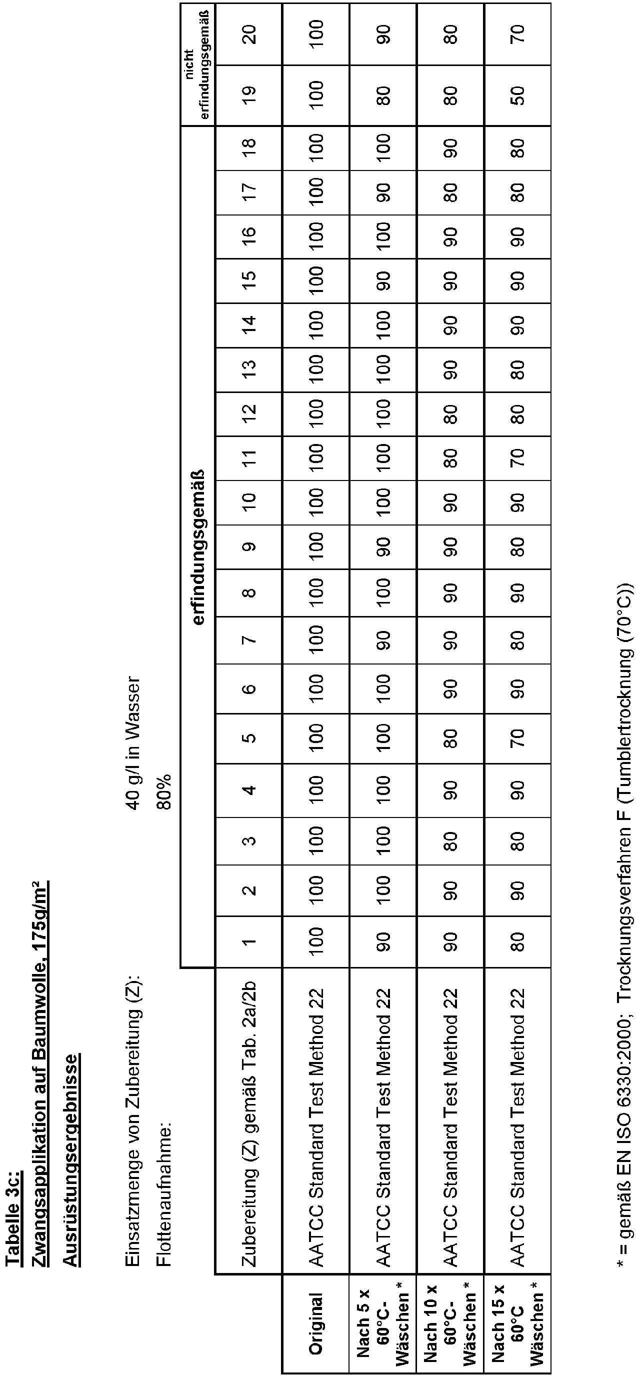

Die folgenden Punkte sind Gegenstand der Erfindung:
1. Organopolysiloxan enthaltend mindestens eine Struktureinheit (i) und/oder (vi): 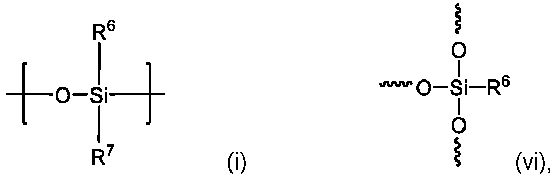 wobei
R⁶ unabhängig voneinander mindestens eine C₈₋₂₈-Alkylgruppe, bevorzugt C₁₄₋₂₀-Alkylgruppe, stärker bevorzugt C₁₆₋₁₈-Alkylgruppe, und mindestens eine Harnstoffgruppe enthält, und
R⁷ unabhängig voneinander ausgewählt ist aus -CH₃, -OH und einer -C₁₋₅-Alkoxygruppe.
2. Organopolysiloxan nach Punkt 1, wobei
R⁶ mindestens eine C₈₋₂₈-Alkylharnstoffgruppe 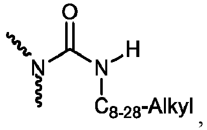 stärker bevorzugt eine C₁₄₋₂₀-Alkylharnstoffgruppe, noch stärker bevorzugt eine C₁₆₋₁₈-Alkylharnstoffgruppe enthält.
3. Organopolysiloxan nach Punkt 1 oder 2, wobei
R⁶ ausgewählt ist aus 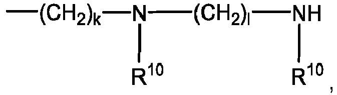 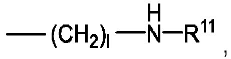 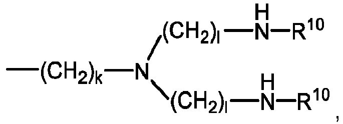 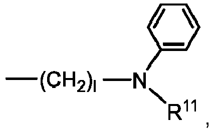 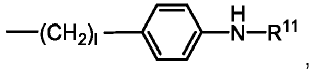 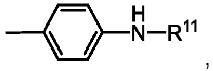 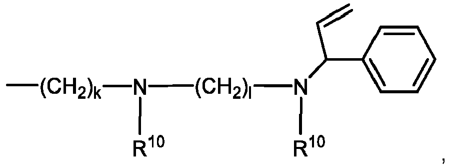 und 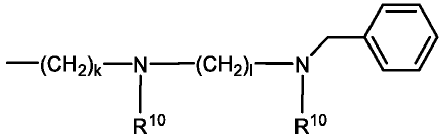 wobei
R¹⁰ unabhängig voneinander H oder R¹¹ ist,
R¹¹ unabhängig voneinander-C(O)-NH-C₈₋₂₈-Alkyl ist, mit der Maßgabe, dass R⁶ mindestens ein R¹¹ enthält,
k 2-4, bevorzugt 2-3 ist und
I 2-4, bevorzugt 2-3 ist.
4. Organopolysiloxan nach einem der vorangehenden Punkte, wobei das Organopolysiloxan ferner mindestens eine Struktureinheit ausgewählt aus 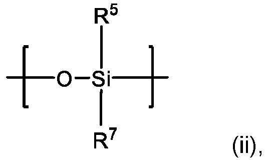 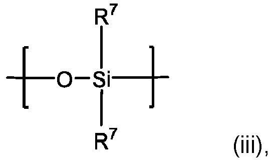 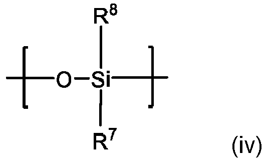 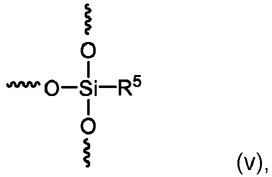 und 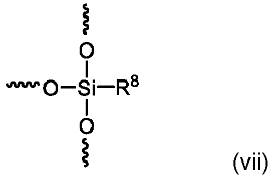 enthält, wobei
R⁵ unabhängig voneinander eine C₈₋₂₈-Alkylgruppe, bevorzugt C₁₄₋₂₀-Alkylgruppe, stärker bevorzugt C₁₆₋₁₈-Alkylgruppe ist,
R⁸ unabhängig voneinander ausgewählt ist aus

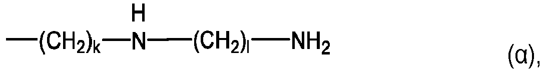

   -(CH₂)ₗ-NH₂ (β),

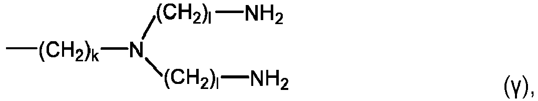

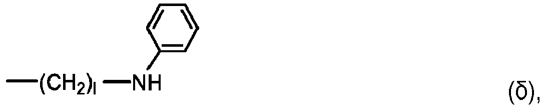

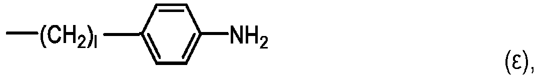

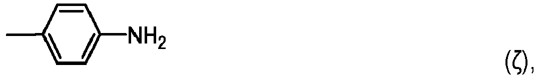

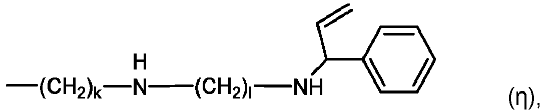

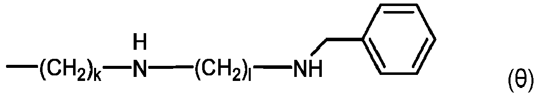

   und
R⁶ und R⁷ wie oben definiert sind.
5. Organopolysiloxan nach einem der vorhergehenden Punkte, wobei das Organopolysiloxan unabhängig voneinander mit Endgruppen ausgewählt aus 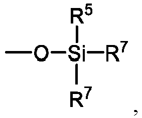 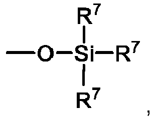 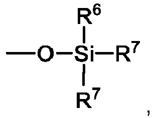 oder 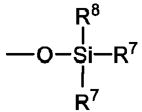 gekappt ist, wobei
R⁵, R⁶, R⁷ und R⁸ wie oben definiert sind.
6. Organopolysiloxan nach einem der vorhergehenden Punkte, wobei der molare Anteil an Struktureinheit (i) im Bereich von 25-100 mol-%, bevorzugt 50-100 mol- % liegt.
7. Organopolysiloxan nach einem der vorhergehenden Punkte, wobei der molare Anteil an Struktureinheit (vi) im Bereich von 25-100 mol-%, bevorzugt 50-100 mol- % liegt.
8. Organopolysiloxan nach einem der vorhergehenden Punkte, wobei der molare Anteil der Struktureinheit (ii) im Bereich von 0-50 mol-%, bevorzugt 0-30 mol-% liegt.
9. Organopolysiloxan nach einem der vorhergehenden Punkte, wobei der molare Anteil der Struktureinheit (iii) im Bereich von 0-40 mol-%, bevorzugt 0-20 mol-% liegt.
10. Organopolysiloxan nach einem der vorhergehenden Punkte, wobei der molare Anteil der Struktureinheit (iv) und/oder (vii) im Bereich von 0-20 mol-%, bevorzugt 0-10 mol-% liegt.
11. Organopolysiloxan nach einem der vorhergehenden Punkte, wobei der molare Anteil der Struktureinheit (v) im Bereich von 0-50 mol-%, bevorzugt 0-30 mol-% liegt.
12. Organopolysiloxan nach einem der vorhergehenden Punkte, wobei der basische Gesamtstickstoffgehalt gemessen mittels Titration 0-3 Gew.-%, bevorzugt 0-1,5 Gew.-%, besonders bevorzugt 0,01-0,5 Gew.-% ist.
13. Verfahren zur Herstellung eines Organopolysiloxans nach einem der Punkte 1-13, umfassend die Schritte
a) Bereitstellen eines Organopolysiloxans und/oder Alkoxysilans mit NCO-reaktiven primären und/oder sekundären Amingruppen,
b) Umsetzen des Organopolysiloxans und/oder Alkoxysilans gemäß a) mit C₈₋₂₈-Alkylisocyanat; und
c) ggf. Hydrolyse/Kondensation des in Schritt b) erhaltenen Alkoxysilans zum Organopolysiloxan.
14. Verfahren nach Punkt 13, wobei das Organopolysiloxan gemäß a) durch Equilibrierung in Gegenwart von oder durch Hydrolyse/Kondensation von (C₁₋₅-Alkoxy)silanen mit mindestens einer NCO-reaktiven primären und/oder sekundären Amingruppe erhalten wird.
15. Verfahren nach Punkt 13, wobei das (C₁₋₅-Alkoxy)silan mit mindestens einer NCO-reaktiven primären und/oder sekundären Amingruppe die Struktur 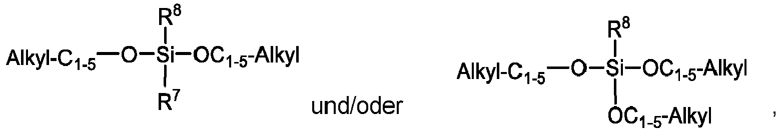 wobei R⁷ und R⁸ wie oben definiert sind.
16. Verfahren nach einem der Punkte 14-15, wobei die Equilibrierung in Gegenwart eines Organopolysiloxans enthaltend Struktureinheiten (ii), (iii), und/oder (v) in Gegenwart eines Katalysators und Wasser erfolgt.
17. Verfahren nach einem der Punkte 13-16, wobei Schritt b) bevorzugt in Gegenwart von Di-n-butylzinndilaurat, Zinn(II)-octoat, Dibutylzinndiacetat, Kaliumoctoat, Zinkdilaurat, Bismuttrilaurat oder tertiäre Amine, wie 1,4-Diazabicyclo[2.2.2]octan, Dimethylcyclohexylamin, Dimethylaminopropyldipropanolamin, Pentamethyldipropylentriamin, N-Methylimidazol oder N-Ethylmorpholin, ggf. bei erhöhter Temperatur, z.B. 40-140°C, erfolgt.
18. Organopolysiloxan erhältlich nach einem Verfahren gemäß einem der Punkte 13-17.
19. Zubereitung umfassend
(1) mindestens ein Umsetzungsprodukt (S), erhältlich durch Umsetzen mindestens einer Verbindung (A) der 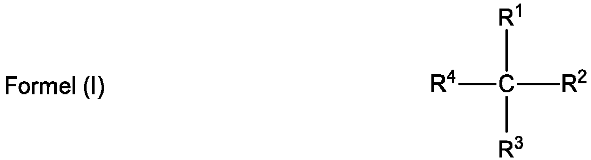 und/oder der 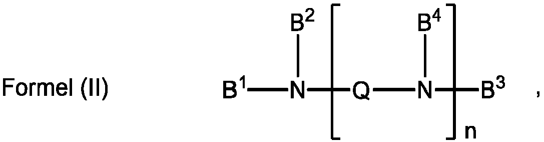 und/oder der 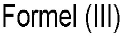 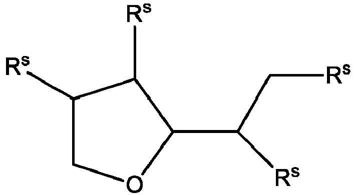 und/oder der 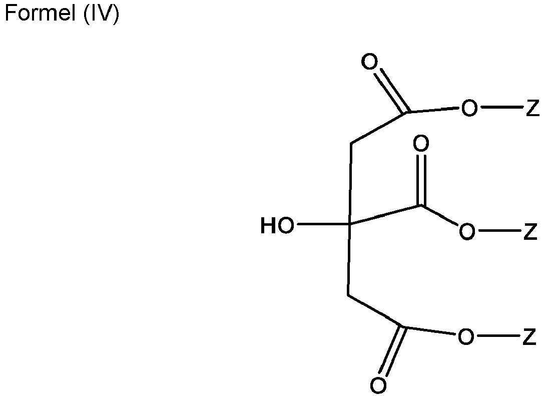 wobei R¹ = -X-Y-Z oder -Z ist, mit
X = -(CH₂)_{n"}-,
Y = 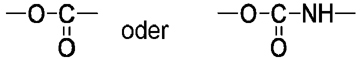 Z = -(CH₂)ₘ-CH₃ ,
R²= 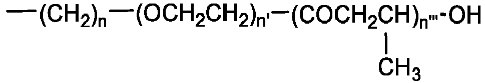 ist,
R³= -X-Y-Z, -Z oder -Y-Z ist, mit der Maßgabe, dass im Falle der Bedeutung -Y-Z im Rest R² n durch n" ersetzt ist,
R⁴= -X-Y-Z oder -(CH₂)_{n'}H ist,
B¹= -V-W-Z oder -Z ist, mit
V = -(CH₂)_{n"}- oder 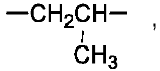 W= 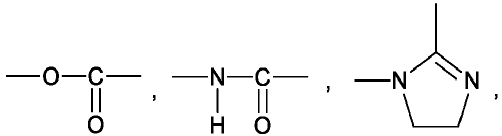 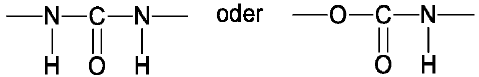 ist,
B² = -(CH₂)_{n"}-NH₂, oder 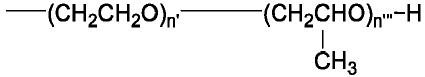 ist,
B³ = -V-W-Z, -Z oder 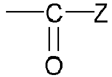 ist,
B⁴ = -V-W-Z oder 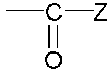 ist,
Q = -(CH₂)_{n"}- ist,
R^{s} unabhängig voneinander -OH, -YZ, 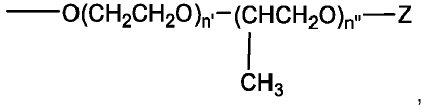 oder 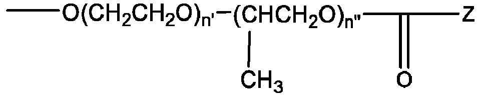 ist,
mit der Maßgabe, dass mindestens ein Rest R^{s} in der Formel (III) eine OH-Gruppe ist, und
n, n', n", n'" und m jeweils unabhängig voneinander eine ganze Zahl ist, mit

| | | |
|---|---|---|
| n | = | 0-2, |
| n' | = | 0-4, |
| n" | = | 1-4, |
| n''' | = | 0-4 und |
| m | = | 8-30, bevorzugt 12-26, stärker bevorzugt 14-22, |

mit mindestens einem nicht blockierten oder zumindest teilweise blockierten Di-, Tri- oder Polyisocyanat (IC), wobei der Anteil an freien Isocyanat (NCO)-Gruppen im Polyisocyanat (IC) zwischen 1,8 und 10 pro Mol liegt.
(2) mindestens ein Organopolysiloxan nach einem der Punkte 1-12 oder 18,
(3) ggf. mindestens ein nicht blockiertes oder zumindest teilweise blockiertes Di-, Tri- oder Polyisocyanat (IC),
(4) ggf. mindestens ein flüssiges Medium, insbesondere Wasser oder ein organisches Lösungsmittel und
(5) ggf. mindestens einen Emulgator.
20. Zubereitung nach Punkt 19, wobei Komponente (1) 10-90 Gew.-%, bevorzugt 20-80 Gew.-%, stärker bevorzugt 25-65 Gew.-%, bezogen auf die Gesamtmasse von Komponenten (1) und (2) ausmacht.
21. Zubereitung nach einem der Punkte 19-20, wobei Komponente (2) 10-90 Gew.- %, bevorzugt 20-80 Gew.-%, stärker bevorzugt 30-70 Gew.-%, bezogen auf die Gesamtmasse der Komponenten (1) und (2) ausmacht.
22. Zubereitung nach einem der Punkte 19-21, wobei Komponente (3) 0-50 Gew.-%, bevorzugt 1-35 Gew.-%, stärker bevorzugt 5-35 Gew.-%, bezogen auf die Gesamtmasse der Komponenten (1), (2) und (3) ausmacht.
23. Zubereitung nach einem der Punkte 19-22, wobei die Komponente (5) 0-25 Gew.- %, bevorzugt 1-20 Gew.-%, stärker bevorzugt 2-15 Gew.-%, bezogen auf die Gesamtmasse der Komponenten (1), (2), ggf. (3) und (5) ausmacht.
24. Zubereitung nach einem der Punkte 19-23 in Form einer Dispersion, bevorzugt in Form einer wässrigen Dispersion.
25. Zubereitung nach einem der Punkte 19-24, wobei der Feststoffgehalt der Dispersion 10-40 Gew.-%, bevorzugt 15-30 Gew.-%, ist.
26. Zubereitung nach einem der Punkte 19-25, wobei das Polyisocyanat (IC) ausgewählt ist aus der Gruppe bestehend aus 2,4-Toluylendiisocyanat, 2,4'-Diphenylmethandiisocyanat, 4,4'-Diphenylmethandiisocyanat (MDI), höherkettigen Homologen des Diphenylmethandiisocyanates (Polymer-MDI), 4-Methyl-cyclohexan-1,3-diisocyanat, Tetramethylendiisocyanat, Tetramethylendiisocyanat-Trimere, Hexamethylendiisocyanat, Hexamethylendiisocyanat-Trimere, Isophorondiisocyanat, Isophorondiisocyanat-Trimere, 2,2,4- oder 2,4,4-Trimethyl-1,6-hexamethylendiisocyanat, Dimerdiisocyanat und Mischungen, wie z.B. Mischungen aus MDI und Polymer-MDI, sowie Derivaten davon.
27. Zubereitung (Z) nach einem der Punkte 19-26, wobei für das Umsetzungsprodukt (S) das molare Verhältnis von freien Isocyanat (NCO)-Gruppen im Polyisocyanat (IC) zu Isocyanat-reaktiven Gruppen in Verbindung (A) auf 1:1 bis 1:1,3, bevorzugt 1 bis 1,1 eingestellt ist.
28. Zubereitung (Z) nach Punkt 27, wobei die Isocyanat-reaktiven Gruppen Hydroxygruppen, primäre und/oder sekundäre Aminogruppen sind.
29. Zubereitung (Z) nach einem der Punkte 19-28, wobei das organische Lösungsmittel gemäß Komponente (4) ausgewählt ist aus Estern, z.B. Ethylacetat, n-Propylacetat, Isopropylacetat, n-Butylacetat, Isobutylacetat oder Amylacetat, Ketonen, z.B. Aceton, Methylethylketon und gesättigten Kohlenwasserstoffen, wie z.B. n-Hexan, n-Heptan oder n-Oktan.
30. Zubereitung nach einem der Punkte 19-29, wobei der Emulgator gemäß Komponente (5) ausgewählt ist aus anionischen, kationischen und nichtionischen Tensiden.
31. Zubereitung nach einem der Punkte 19-30, wobei die Zubereitung frei von Fluorverbindungen ist.
32. Verwendung des Organopolysiloxans nach einem der Punkte 1-12 oder 18 oder der Zubereitung nach einem der Punkte 19-31 als Hydrophobierungsmittel
33. Verwendung nach Punkt 32 als Hydrophobierungsmittel auf Flächengebilden, insbesondere textilen Substraten, Papier, Leder und mineralischen Flächengebilden.
34. Verwendung nach Punkt 33 als Additiv in Farben, Lacken oder Putzen.
35. Verfahren zur Hydrophobierung von Substraten, umfassend Aufbringen der Zubereitung Z nach einem der Punkte 19-31 oder des Organopolysiloxans nach einem der Punkte 1-12 oder 18 auf ein Substrat, bevorzugt ein Flächengebilde, stärker bevorzugt ein textiles Substrat, Papier, Leder oder mineralisches Substrat.
36. Verfahren nach Punkt 35, wobei das Aufbringen mittels Sprühen, Tauchen, Tränken, Streichen oder durch Schwammauftrag erfolgt.
37. Verfahren nach Punkt 35 oder 36, wobei die Zubereitung mittels Zwangsapplikation oder im Ausziehverfahren auf ein textiles Substrat aufgebracht wird.

## Patentansprüche

1. Organopolysiloxan enthaltend mindestens eine Struktureinheit (i) und/oder (vi): 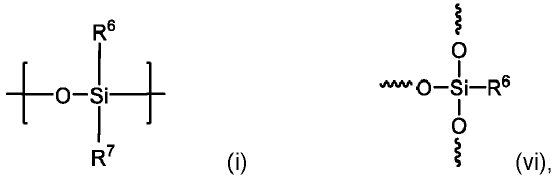 wobei
R⁶ unabhängig voneinander mindestens eine C₈₋₂₈-Alkylgruppe, bevorzugt C₁₄₋₂₀-Alkylgruppe, stärker bevorzugt C₁₆₋₁₈-Alkylgruppe, und mindestens eine Harnstoffgruppe enthält, und
R⁷ unabhängig voneinander ausgewählt ist aus -CH₃, -OH und einer -C₁₋₅-Alkoxygruppe.

2. Organopolysiloxan nach Anspruch 1, wobei R⁶ mindestens eine C₈₋₂₈-Alkylharnstoffgruppe 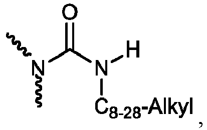 stärker bevorzugt eine C₁₄₋₂₀-Alkylharnstoffgruppe, noch stärker bevorzugt eine C₁₆₋₁₈-Alkylharnstoffgruppe enthält und insbesondere ausgewählt ist aus 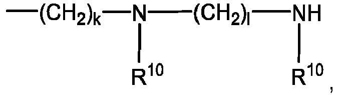 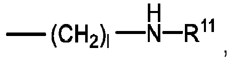 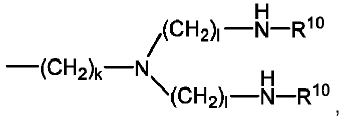 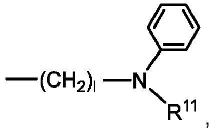 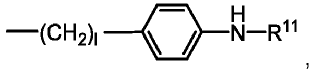 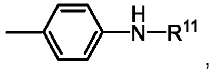 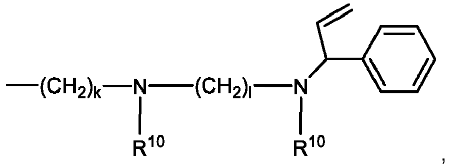 und 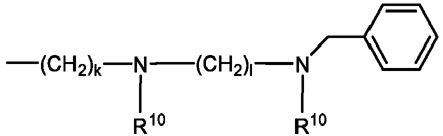 wobei
R¹⁰ unabhängig voneinander H oder R¹¹ ist,
R¹¹ unabhängig voneinander -C(O)-NH-C₈₋₂₈-Alkyl ist, mit der Maßgabe,
dass R⁶ mindestens ein R¹¹ enthält,
k 2-4, bevorzugt 2-3 ist und
I 2-4, bevorzugt 2-3 ist.

3. Organopolysiloxan nach einem der vorangehenden Ansprüche, wobei das Organopolysiloxan ferner mindestens eine Struktureinheit ausgewählt aus 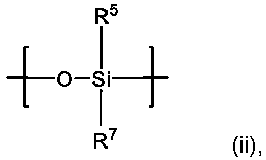 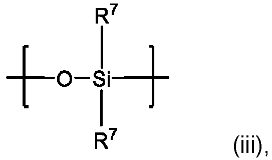 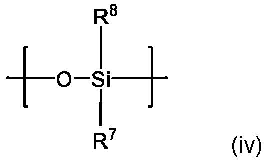 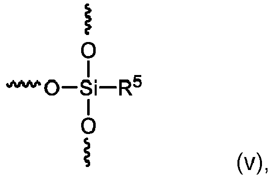 und 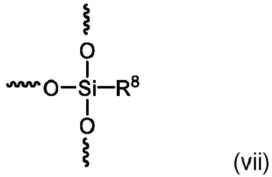 enthält, wobei
R⁵ unabhängig voneinander eine C₈₋₂₈-Alkylgruppe, bevorzugt C₁₄₋₂₀-Alkylgruppe, stärker bevorzugt C₁₆₋₁₈-Alkylgruppe ist,
R⁸ unabhängig voneinander ausgewählt ist aus 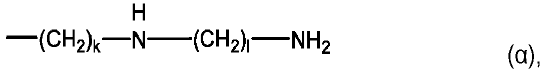
-(CH₂)ₗ-NH₂ (β), 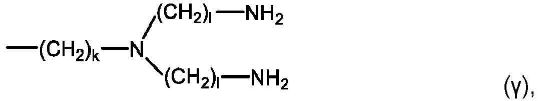 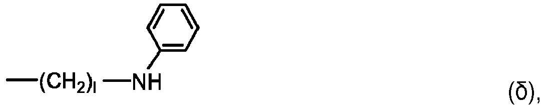 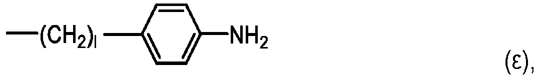 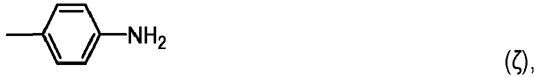 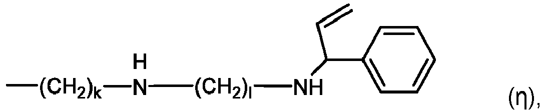 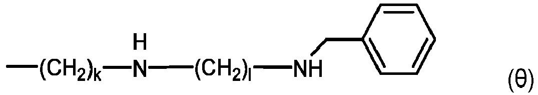
und
R⁶ und R⁷ wie oben definiert sind.

4. Organopolysiloxan nach einem der vorhergehenden Ansprüche, wobei der molare Anteil an Struktureinheit (i) im Bereich von 25-100 mol-%, bevorzugt 50-100 mol-% liegt und/oder der molare Anteil an Struktureinheit (vi) im Bereich von 25-100 mol-%, bevorzugt 50-100 mol-% liegt und/oder der molare Anteil der Struktureinheit (ii) im Bereich von 0-50 mol-%, bevorzugt 0-30 mol-% liegt und/oder molare Anteil der Struktureinheit (iii) im Bereich von 0-40 mol-%, bevorzugt 0-20 mol-% liegt und/oder der molare Anteil der Struktureinheit (iv) und/oder (vii) im Bereich von 0-20 mol-%, bevorzugt 0-10 mol-% liegt und/oder der molare Anteil der Struktureinheit (v) im Bereich von 0-50 mol-%, bevorzugt 0-30 mol-% liegt.

5. Verfahren zur Herstellung eines Organopolysiloxans nach einem der Ansprüche 1-4, umfassend die Schritte
a) Bereitstellen eines Organopolysiloxans und/oder Alkoxysilans mit NCO-reaktiven primären und/oder sekundären Amingruppen,
b) Umsetzen des Organopolysiloxans und/oder Alkoxysilans gemäß a) mit C₈₋₂₈-Alkylisocyanat; und
c) ggf. Hydrolyse/Kondensation des in Schritt b) erhaltenen Alkoxysilans zum Organopolysiloxan.

6. Verfahren nach Anspruch 5, wobei das Organopolysiloxan gemäß a) durch Equilibrierung in Gegenwart von oder durch Hydrolyse/Kondensation von (C₁₋₅-Alkoxy)silanen mit mindestens einer NCO-reaktiven primären und/oder sekundären Amingruppe erhalten wird, wobei das (C₁₋₅-Alkoxy)silan mit mindestens einer NCO-reaktiven primären und/oder sekundären Amingruppe bevorzugt die Struktur 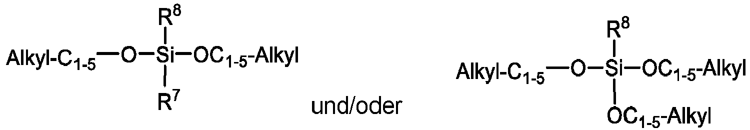 aufweist, wobei R⁷ und R⁸ wie oben definiert sind.

7. Zubereitung umfassend
(1) mindestens ein Umsetzungsprodukt (S), erhältlich durch Umsetzen mindestens einer Verbindung (A) der 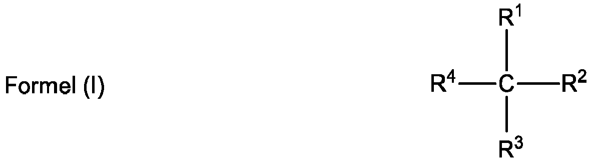 und/oder der 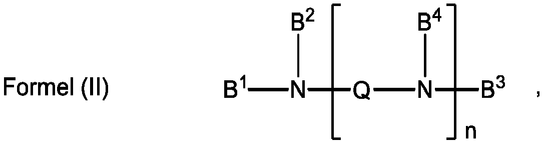 und/oder der 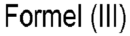 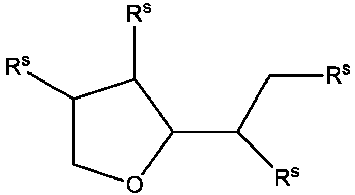 und/oder der 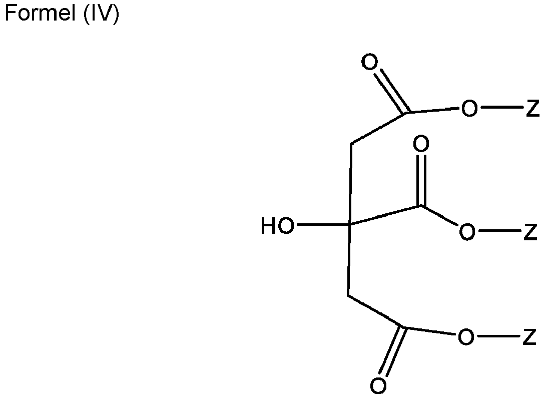
wobei R¹ = -X-Y-Z oder -Z ist, mit
X = -(CH₂)_{n"}-,
Y = 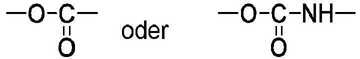
Z = -(CH₂)ₘ-CH₃ ,
R²= 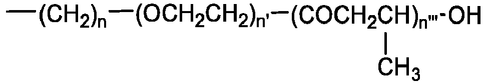 ist,
R³= -X-Y-Z, -Z oder -Y-Z ist, mit der Maßgabe, dass im Falle der Bedeutung -Y-Z im Rest R² n durch n" ersetzt ist,
R⁴= -X-Y-Z oder -(CH₂)_{n'}H ist,
B¹= -V-W-Z oder -Z ist, mit
V = -(CH₂)_{n"}- oder 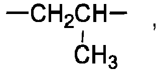
W= 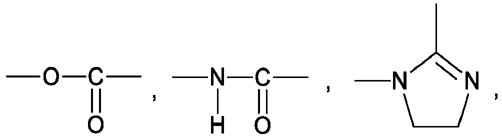 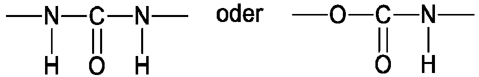 ist,
B² = -(CH₂)_{n"}-NH₂, oder 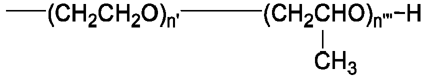 ist,
B³ = -V-W-Z, -Z oder 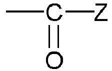 ist,
B⁴ = -V-W-Z oder 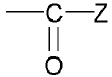 ist,
Q = -(CH₂)_{n"}- ist,
R^{s} unabhängig voneinander -OH, -YZ, 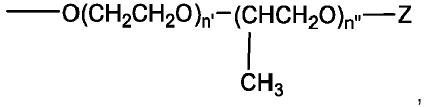 oder 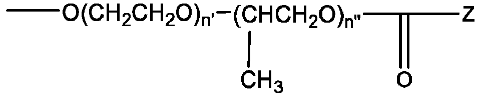 ist,
mit der Maßgabe, dass mindestens ein Rest R^{s} in der Formel (III) eine OH-Gruppe ist, und
n, n', n", n'" und m jeweils unabhängig voneinander eine ganze Zahl ist, mit
| | | |
|---|---|---|
| n | = | 0-2, |
| n' | = | 0-4, |
| n" | = | 1-4, |
| n'" | = | 0-4 und |
| m | = | 8-30, bevorzugt 12-26, stärker bevorzugt 14-22, |
mit mindestens einem nicht blockierten oder zumindest teilweise blockierten Di-, Tri- oder Polyisocyanat (IC), wobei der Anteil an freien Isocyanat (NCO)-Gruppen im Polyisocyanat (IC) zwischen 1,8 und 10 pro Mol liegt,
wobei die Zubereitung bevorzugt frei von Fluorverbindungen ist.
(2) mindestens ein Organopolysiloxan nach einem der Ansprüche 1-4,
(3) ggf. mindestens ein nicht blockiertes oder zumindest teilweise blockiertes Di-, Tri- oder Polyisocyanat (IC),
(4) ggf. mindestens ein flüssiges Medium, insbesondere Wasser oder ein organisches Lösungsmittel und
(5) ggf. mindestens einen Emulgator.

8. Zubereitung nach Anspruch 7, wobei Komponente (1) 10-90 Gew.-%, bevorzugt 20-80 Gew.-%, stärker bevorzugt 25-65 Gew.-%, bezogen auf die Gesamtmasse von Komponenten (1) und (2) ausmacht und/oder Komponente (2) 10-90 Gew.-%, bevorzugt 20-80 Gew.-%, stärker bevorzugt 30-70 Gew.-%, bezogen auf die Gesamtmasse der Komponenten (1) und (2) ausmacht und/oder Komponente (3) 0-50 Gew.-%, bevorzugt 1-35 Gew.-%, stärker bevorzugt 5-35 Gew.-%, bezogen auf die Gesamtmasse der Komponenten (1), (2) und (3) ausmacht und/oder Komponente (5) 0-25 Gew.-%, bevorzugt 1-20 Gew.-%, stärker bevorzugt 2-15 Gew.-%, bezogen auf die Gesamtmasse der Komponenten (1), (2), ggf. (3) und (5) ausmacht.

9. Zubereitung nach einem der Ansprüche 7-8 in Form einer Dispersion, bevorzugt in Form einer wässrigen Dispersion, wobei der Feststoffgehalt der Dispersion bevorzugt 10-40 Gew.-%, stärker bevorzugt 15-30 Gew.-%, ist.

10. Zubereitung nach einem der Ansprüche 7-9, wobei das Polyisocyanat (IC) ausgewählt ist aus der Gruppe bestehend aus 2,4-Toluylendiisocyanat, 2,4'-Diphenylmethandiisocyanat, 4,4'-Diphenylmethandiisocyanat (MDI), höherkettigen Homologen des Diphenylmethandiisocyanates (Polymer-MDI), 4-Methyl-cyclohexan-1,3-diisocyanat, Tetramethylendiisocyanat, Tetramethylendiisocyanat-Trimere, Hexamethylendiisocyanat, Hexamethylendiisocyanat-Trimere, Isophorondiisocyanat, Isophorondiisocyanat-Trimere, 2,2,4- oder 2,4,4-Trimethyl-1,6-hexamethylendiisocyanat, Dimerdiisocyanat und Mischungen, wie z.B. Mischungen aus MDI und Polymer-MDI, sowie Derivaten davon.

11. Zubereitung (Z) nach einem der Ansprüche 7-10, wobei für das Umsetzungsprodukt (S) das molare Verhältnis von freien Isocyanat (NCO)-Gruppen im Polyisocyanat (IC) zu Isocyanat-reaktiven Gruppen in Verbindung (A) auf 1:1 bis 1:1,3, bevorzugt 1 bis 1,1 eingestellt ist, wobei die Isocyanat-reaktiven Gruppen bevorzugt Hydroxygruppen, primäre und/oder sekundäre Aminogruppen sind.

12. Verwendung des Organopolysiloxans nach einem der Ansprüche 1-4 oder der Zubereitung nach einem der Ansprüche 7-11 als Hydrophobierungsmittel, insbesondere auf Flächengebilden, insbesondere textilen Substraten, Papier, Leder und mineralischen Flächengebilden oder als Additiv in Farben, Lacken oder Putzen.

13. Verfahren zur Hydrophobierung von Substraten, umfassend Aufbringen der Zubereitung Z nach einem der Ansprüche 7-11 oder des Organopolysiloxans nach einem der Ansprüche 1-4 auf ein Substrat, bevorzugt ein Flächengebilde, stärker bevorzugt ein textiles Substrat, Papier, Leder oder mineralisches Substrat.

14. Verfahren nach Anspruch 13, wobei das Aufbringen mittels Sprühen, Tauchen, Tränken, Streichen oder durch Schwammauftrag erfolgt.

15. Verfahren nach Anspruch 13 oder 14, wobei die Zubereitung mittels Zwangsapplikation oder im Ausziehverfahren auf ein textiles Substrat aufgebracht wird.
